(19) Europäisches Patentamt
European Patent Office
Office européen des brevets

(11) EP 3 052 289 B1

# (12) EUROPÄISCHE PATENTSCHRIFT

(45) Veröffentlichungstag und Bekanntmachung des Hinweises auf die Patenterteilung:
**25.09.2019 Patentblatt 2019/39**

(21) Anmeldenummer: **14776878.2**

(22) Anmeldetag: **29.09.2014**

(51) Int Cl.:
***B29C 44/38*** (2006.01) ***B29C 44/60*** (2006.01)
***B29C 45/77*** (2006.01)

(86) Internationale Anmeldenummer:
**PCT/EP2014/070723**

(87) Internationale Veröffentlichungsnummer:
**WO 2015/049185 (09.04.2015 Gazette 2015/14)**

## (54) VERFAHREN ZUR HERSTELLUNG EINES FORMTEILS IM SCHAUMSPRITZGUSS UND FORMTEIL AUS EINEM AUFGESCHÄUMTEN THERMOPLASTISCHEN KUNSTSTOFF

METHOD FOR THE PRODUCTION OF A MOULDED PART IN FOAM INJECTION MOULDING AND MOULDED PART CONSISTING OF A FOAMED THERMOPLASTIC PLASTIC

PROCÉDÉ DE FABRICATION D'UNE PIÈCE MOULÉE PAR MOULAGE PAR INJECTION DE MOUSSE ET PIÈCE MOULÉE CONSTITUÉE D'UNE MATIÈRE SYNTHÉTIQUE THERMOPLASTIQUE EXPANSÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.10.2013 EP 13187158**

(43) Veröffentlichungstag der Anmeldung:
**10.08.2016 Patentblatt 2016/32**

(73) Patentinhaber: **Covestro Deutschland AG**
**51373 Leverkusen (DE)**

(72) Erfinder:
- **GROSSER, Ulrich**
**51515 Kürten (DE)**
- **HELMIG, Jan**
**41541 Dormagen (DE)**
- **SCHULZ, Thorsten**
**51371 Leverkusen (DE)**
- **THULKE, Thomas**
**50259 Pulheim (DE)**
- **WINKLER, Lucia**
**42929 Wermelskirchen (DE)**

(74) Vertreter: **Levpat**
**c/o Covestro AG**
**Gebäude 4825**
**51365 Leverkusen (DE)**

(56) Entgegenhaltungen:
**DE-A1-102005 051 081**
**JP-A- S63 281 811**
**JP-A- 2001 198 943**
**US-A- 4 229 395**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 052 289 B1

## Beschreibung

Die Erfindung betrifft ein Verfahren zur Herstellung eines Formteils im Schaumspritzguss, bei dem durch Schmelzen eines thermoplastischen Kunststoffs eine Kunststoffschmelze bereitgestellt wird, bei dem die Kunststoffschmelze mit einem Treibmittel beladen wird und bei dem die mit dem Treibmittel beladene Kunststoffschmelz unter Druck in einen Hohlraum eines Formwerkzeugs eingespritzt wird, so dass die Kunststoffschmelze den Hohlraum hinter einer durch den Hohlraum laufenden Schmelzfront ausfüllt. Weiterhin betrifft die Erfindung ein Formteil aus einem aufgeschäumten thermoplastischen Kunststoff, insbesondere hergestellt im Schaumspritzguss, vorzugsweise herstellbar mit dem zuvor genannten Verfahren. Weiterhin betrifft die Erfindung Verwendungen für ein solches Formteil.

Das Aufschäumen von thermoplastischen Kunststoffsystemen im Spritzguss- (Schaumspritzguss) oder Extrusionsprozess (Schaumextrusion) ist seit Jahrzehnten Stand der Technik. Hierbei gibt es grundsätzlich die Unterscheidung zwischen chemischen und physikalischen Aufschäumprozessen. Beim chemischen Aufschäumen wird dem thermoplastischen Kunststoff in Granulatform ein geeignetes Treibmittel in definierter Dosierung beigemischt, welches durch die hohen Temperaturen beim Spritzguss- oder Extrusionsprozess reagiert und Gase freisetzt, die den thermoplastischen Kunststoff zum Aufschäumen bringen.

Beim physikalischen Schäumen, welches meist für Spritzprozesse eingesetzt wird, gibt es verschiedene technische Methoden der Zudosierung des Treibmittels. Eine gängige Methode besteht zum Beispiel darin, ein Gas wie beispielsweise Stickstoff oder Kohlendioxid in überkritischem Zustand der flüssigen Kunststoffschmelze im Bereich einer zur Förderung der Kunststoffschmelze verwendeten Schnecke zuzuführen. Durch eine spezielle Ausführung der Schneckengeometrie kommt es vor dem Verspritzen des thermoplastischen Kunststoffs zu einer guten Durchmischung unter hohem Druck, so dass das Gas sehr gleichmäßig in der Kunststoffschmelze verteilt wird (überkritische Lösung). Beim Eintritt der Kunststoffschmelze aus der Schnecke in den Hohlraum des Formwerkzeugs kommt es zu einem deutlichen Druckabfall in der Kunststoffschmelze, so dass das überkritische Gas in den unterkritischen Zustand gelangt, unter Bläschenbildung expandieren kann und so den thermoplastischen Kunststoff aufschäumen lässt. Die auf diese Weise hergestellten Formteile weisen einen Kern mit einer durch die Bläschen hervorgerufenen mikrozellulären Struktur auf.

Die Eigenschaften von geschäumten thermoplastischen Kunststoffen unterscheiden sich zumeist deutlich von den Eigenschaften kompakt gespritzter oder extrudierter thermoplastischer Kunststoffe. Ein häufiger Grund für den Einsatz von Schäumprozessen ist die erzielbare Gewichtsreduktion des Formteils bei gleichem Formteilvolumen. Außerdem können die spezifischen mechanischen Eigenschaften bezogen auf das Gewicht, wie insbesondere die Biegesteifigkeit und die Torsionssteifigkeit, deutlich verbessert werden.

Ein weiterer Vorteil geschäumter thermoplastischer Kunststoffe besteht darin, dass die mit Treibmittel beladenen Kunststoffschmelze beim Aufschäumen im Hohlraum des Formwerkzeugs eine geringere Viskosität aufweist als reine Kunststoffschmelzen. Dadurch können insbesondere Formteile mit langen und engen Fließwegen besser gefüllt werden.

Neben den genannten mechanischen und rheologischen Vorteilen verfügen geschäumte thermoplastische Kunststoffe über ein sehr gutes Isolationsverhalten. Mit der zusätzlichen Gewichtsreduktion gegenüber ungeschäumten Kunststoffen lassen sich damit auch Formteile mit hohen Wanddicken konstruktiv sinnvoll fertigen, die über extrem gute Isoliereigenschaften verfügen.

Ein großer Nachteil der Schäumverfahren, insbesondere auch des Schaumspritzgusses, sind die sehr ungleichmäßigen und rauen Oberflächen der mit diesen Verfahren hergestellten Formteile. Die ungleichmäßigen Formteiloberflächen werden durch verschiedenste Arten von Oberflächendefekten hervorgerufen, die bei Schäumprozessen auftreten können. Diese Defekte hängen von sehr vielen Faktoren ab und sind nach heutigem Stand der Technik nur schwer vorauszusagen. So haben zum Beispiel Verarbeitungsparameter wie Einspritzgeschwindigkeit, Werkzeugtemperatur, Gasbeladung etc. starke Einflüsse, aber auch die Formteilgeometrie an sich, wie zum Beispiel Formteildicke, Ausbrüche oder Stege, Wanddicken, Sprünge etc. kann die Oberflächenfehler massiv beeinflussen. Das Dokument JP-A-2001198943 offenbart ein Verfahren gemäß dem Oberbegriff des Anspruchs 1.

Im Stand der Technik wurde auf verschiedene Weise und mit unterschiedlichem Erfolg versucht, die Oberflächendefekte der Formteile zu kaschieren, um das optische Erscheinungsbild der Formteile zu verbessern. Bei der Schaumextrusion kann beispielsweise mit einer ungeschäumten, koextrudierten Schicht gearbeitet werden, welche die Fehlstellen des geschäumten Kerns verdeckt. Beim Schaumspritzguss kann beispielsweise mit Gegendruck im Hohlraum des Formwerkzeugs gearbeitet werden, der das Ausgasen der mit Treibmittel beladenen Kunststoffschmelze an der Schmelzfront verhindert, so dass sich eine geschlossene Deckschicht bilden kann. Weiterhin hat sich herausgestellt, dass sich eine hohe Temperatur der Formwerkzeugwand positiv auf die Oberflächenqualität des hergestellten Formteils auswirkt. Bei einfachen Formteilgeometrien werden zudem häufig Folien in den Hohlraum des Formwerkzeugs eingelegt, die dann mit dem aufschäumenden thermoplastischen Kunststoff hinterspritzt werden und die geschäumte Oberfläche kaschieren. Diese Methoden zum Kaschieren der Oberflächendefekte sind jedoch teilweise recht aufwändig, führen mitunter nur zu mäßigen Ergebnissen oder beeinflussen die Eigenschaften der Formteiloberfläche.

Aufgrund der zuvor beschriebenen vorteilhaften Materialeigenschaften besteht im Stand der Technik grundsätzliches ein großes Bedürfnis an im Schaumspritzgussverfahren hergestellten Formteilen. Diese Formteile sollen jedoch gleichzeitig eine optisch ansprechende Oberfläche aufweisen, und zwar möglichst ohne aufwändige Modifikation des Herstellungsprozesses. Ausgehend von dem zuvor beschriebenen Stand der Technik liegt der vorliegenden Erfindung die Aufgabe zugrunde, ein Verfahren zur Herstellung eines Formteils im Schaumspritzguss sowie ein im Schaumspritzguss hergestelltes Formteil zur Verfügung zu stellen, mit denen eine optisch ansprechende Oberfläche des Formteils erreicht werden kann, insbesondere unter Vermeidung der Nachteile des zuvor beschriebenen Stands der Technik.

Diese Aufgabe wird bei einem Verfahren nach Anspruch 1 gelöst.

Beim Schaumspritzguss wird eine mit einem Treibmittel beladene Kunststoffschmelze unter Druck in einen Hohlraum eines Formwerkzeugs eingespritzt. Das Formwerkzeug weist dazu mindestens eine Einspritzöffnung auf, an der eine Einspritzvorrichtung zum Einspritzen der Kunststoffschmelze durch die Einspritzöffnung des Formwerkzeugs angeschlossen ist. Der Hohlraum des Formwerkzeugs umfasst einen Formteilbereich, der der Negativkontur des herzustellenden Formteils entspricht, sowie üblicherweise mindestens einen Zuführkanal, der die mindestens eine Einspritzöffnung mit dem Formteilbereich verbindet. Bei mehreren Einspritzöffnungen können entsprechend mehrere Zuführkanäle vorgesehen sein. Ein Zuführkanal kann auch als Verteilerkanal ausgebildet sein, der die mindestens eine Einspritzöffnung mit mehreren Stellen des Formteilbereichs verbindet. Die nach dem Spritzen in dem Zuführkanal erstarrte, mit dem eigentlichen Formteil verbundene Kunststoffschmelze wird als Anguss bezeichnet. Ein solcher Anguss wird vor der weiteren Verwendung des Formteils üblicherweise entfernt, beispielsweise durch Sägen, Abbrechen, Schneiden etc., um das eigentliche Formteil mit der gewünschten Form zu erhalten. Der Übergang von einem Anguss zum eigentlichen Formteil wird als Angusspunkt bezeichnet.

Unter der Einspritzgeschwindigkeit, mit der die Kunststoffschmelze in den Hohlraum des Formwerkzeugs gespritzt wird, wird vorliegend die Geschwindigkeit verstanden, mit der die Kunststoffschmelze zur Einspritzöffnung des Formwerkzeugs gefördert wird. Zur Förderung der Kunststoffschmelze zur Einspritzöffnung des Formwerkzeugs kann beispielsweise ein Schneckenförderer verwendet werden. Die für das Befüllen des Hohlraums erforderliche Menge an Kunststoffschmelze kann dazu mit der Schnecke des Schneckenförderers zunächst in einem Hohlraum vor der Schnecke befördert werden. Beim Einspritzen kann die Schnecke dann translatorisch nach vorne bewegt werden, so dass sie gleich einem Kolben die Kunststoffschmelze durch die Einspritzöffnung in den Hohlraum des Formwerkzeugs drückt. Die Einspritzgeschwindigkeit entspricht hierbei der Geschwindigkeit, mit der die Schnecke nach vorne bewegt wird.

Da die Menge der zur Einspritzöffnung geförderten Kunststoffschmelze bei einer bestimmten Translationsgeschwindigkeit der Schnecke auch von dem Querschnitt des jeweiligen Schneckenförderers abhängt, ist die gemäß dem zuvor beschriebenen Verfahren einzustellende Einspritzgeschwindigkeit geräteabhängig. Somit kann die für ein bestimmtes Formwerkzeug einzustellende Einspritzgeschwindigkeit nicht nur von der Formwerkzeuggeometrie, sondern auch von der Geometrie der Maschine abhängen, mit der der Kunststoffschmelze zur Einspritzöffnung des Formwerkzeugs gefördert wird. Für ein vorgegebenes Formwerkzeug, eine vorgegebene Kunststoffschmelze und eine vorgegebene Maschine zur Förderung der Kunststoffschmelze zur Einspritzöffnung kann die einzustellende Einspritzgeschwindigkeit dann jeweils bestimmt werden.

Unter dem Innendruck der Kunststoffschmelze wird der ortsabhängige, lokale dynamische Staudruck innerhalb der Kunststoffschmelze verstanden. Während des Einspritzvorgangs ergibt sich in der Kunststoffschmelze eine von der Einspritzgeschwindigkeit abhängige Druckverteilung, wobei der Innendruck der Kunststoffschmelze von der Einspritzöffnung des Hohlraums zum Einleiten der Kunststoffschmelze bis hin zur Schmelzfront abnimmt. Der Innendruck der Kunststoffschmelze an der Schmelzfront ergibt sich durch einen etwaigen Gegendruck des Gases im verbleibenden, noch nicht ausgefüllten Hohlraum des Formwerkzeugs und ist daher üblicherweise relativ gering, insbesondere nahe bei 0 bar bzw. bei Umgebungsdruck / atmosphärischem Druck.

Unter einem Abschnitt der Schmelzfront wird vorliegend vorzugsweise ein zusammenhängender Abschnitt der Schmelzfront verstanden, beispielsweise ein Abschnitt der Schmelzfront, der sich in einem bestimmten Teilbereich des Hohlraums fortbewegt. Unter einem Bereich, der einem solchen Abschnitt der Schmelzfront mit einem zeitlichen Abstand von höchstens 0,15 s nachfolgt, wird ein Bereich innerhalb der Kunststoffschmelze verstanden, der zu einem gegebenen Zeitpunkt an einer Stelle innerhalb des Hohlraums angeordnet ist, an der sich höchstens 0,15 s vor diesem Zeitpunkt der entsprechende Abschnitt der Schmelzfront befand. Mit anderen Worten entspricht der räumliche Abstand dieses Bereichs von dem entsprechenden Schmelzfrontabschnitt der Entfernung, den der Schmelzfrontabschnitt innerhalb von höchstens 0,15 s zurückgelegt hat. Bewegt sich der betreffender Abschnitt der Schmelzfront beispielsweise mit einer konstanten Geschwindigkeit von 100 mm/s durch den Hohlraum, so darf der betreffende Bereich von der Schmelzfront höchstens $(100\ mm/s)\cdot(0{,}15\ s) = 15\ mm$ entfernt sein. Bei einer größeren Geschwindigkeit des Schmelzfrontabschnitts darf der räumliche Abstand des entsprechenden Bereichs zum Schmelzfrontabschnitt also größer sein als bei einer geringeren Geschwindigkeit des Schmelzfrontabschnitts.

Unter dem kritischen Druck des Treibmittels wird derjenige Druck verstanden, oberhalb dessen sich das Treibmittel in überkritischer Lösung mit der Kunststoffschmelze befindet. Bei Drücken oberhalb des kritischen Drucks zeigt das Treibmittel zwischen der gasförmigen und flüssigen Phase keinen Phasenübergang erster Ordnung, sondern nur noch einen Phasenübergang höherer, in der Regel zweiter Ordnung. Der kritische Druck ist abhängig vom verwendeten

Treibmittel und beträgt beispielsweise 33,9 bar für Stickstoff und 73,8 bar für Kohlenstoffdioxid.

Die Temperatur der Kunststoffschmelze bzw. des Treibmittels liegt in diesem Bereich insbesondere auch oberhalb der kritischen Temperatur des Treibmittels. Die kritische Temperatur beträgt beispielsweise -146,95 °C für Stickstoff und 31,0 °C für Kohlenstoffdioxid und wird folglich bei den typischen Verfahrenstemperaturen beim Schaumspritzguss ohnehin überschritten.

Im Rahmen der vorliegenden Erfindung wurde erkannt, dass mit dem zuvor beschriebenen Verfahren ein Formteil im Schaumspritzguss hergestellt werden kann, dessen Oberfläche ein optisch ansprechendes Erscheinungsbild aufweist. Die mit diesem Verfahren herstellbaren Formteile weisen eine optisch strukturierte Oberfläche auf, die an eine Eisoberfläche erinnert (Eisoptik).

Während bei den bisher aus dem Stand der Technik bekannten Verfahren grundsätzlich versucht wurde, die optische Strukturierung der Formteiloberfläche zu vermeiden, beispielsweise durch Kaschierung von Oberflächenfehlern, liegt der vorliegenden Erfindung die Erkenntnis zugrunde, die Oberflächenstrukturierung gezielt einzusetzen, um auf diese Weise eine optisch ansprechende Formteiloberfläche zu erhalten. Es wurde erkannt, dass mit dem zuvor beschriebenen Verfahren, und zwar insbesondere durch die beschriebene Einstellung der Einspritzgeschwindigket, eine optische Oberflächenstrukturierung der Formteile erreicht wird, die die Struktur einer Eisoberfläche nachbildet. Die mit dem Verfahren herstellbaren Formteile weisen daher im Gegensatz zu den mit den bisherigen Verfahren bezweckten optisch homogenen Formteiloberflächen eine ansprechende optisch strukturierte Formteiloberfläche auf.

Die beschriebene Einstellung der Einspritzgeschwindigkeit hat sich in Versuchen mit verschiedenen Materialien, Formteilformen und Formteildicken als überaus universell herausgestellt, so dass mit dem zuvor beschriebenen Verfahren eine Vielzahl verschiedenartiger Formteile mit entsprechendem optischen Erscheinungsbild hergestellt werden kann.

Bei dem Verfahren wird durch Schmelzen eines thermoplastischen Kunststoffs eine Kunststoffschmelze bereitgestellt. Zu diesem Zweck kann beispielsweise ein separater Schmelzofen oder ein beheizter Schmelzbereich eines zum Transport des thermoplastischen Kunststoffs bzw. der Kunststoffschmelze verwendeten Schneckenförderers, z.B. eines Extruders, vorgesehen sein. Der thermoplastische Kunststoff kann beispielsweise als Granulat in den Schmelzofen bzw. in den Schmelzbereich eingebracht und dort auf eine Temperatur oberhalb der Schmelztemperatur des thermoplastischen Kunststoffs erhitzt werden.

Die Kunststoffschmelze wird bei dem Verfahren mit einem Treibmittel beladen. Hierunter wird verstanden, dass in die Kunststoffschmelze ein Treibmittel eingebracht wird, welches ein Aufschäumen der Kunststoffschmelze im Hohlraum des Formwerkzeugs bewirkt. Das Treibmittel kann auf physikalische Weise direkt als Gas in die Kunststoffschmelze eingebracht werden. Alternativ ist es möglich, ein Treibmitteledukt in den Kunststoff oder in die Kunststoffschmelze einzubringen (beispielsweise als Granulat oder in Pulverform), das beispielsweise durch Wärmeeinwirkung, vorzugsweise unter Ablauf einer chemischen Reaktion, das eigentliche gasförmige Treibmittel bildet.

Die mit dem Treibmittel beladene Kunststoffschmelze wird bei dem Verfahren unter Druck in einen Hohlraum eines Formwerkzeugs eingespritzt, so dass die Kunststoffschmelze den Hohlraum hinter einer durch den Hohlraum laufenden Schmelzfront ausfüllt. Zu Beginn dieses Verfahrensschritts ist der Hohlraum zunächst leer bzw. mit einem Gas gefüllt. Die Kunststoffschmelze wird dann durch eine Öffnung in den Hohlraum des Formwerkzeugs gespritzt, und zwar unter äußerer Beaufschlagung mit Druck, so dass die Kunststoffschmelze in den Hohlraum hineingedrückt wird und sich nach und nach im Hohlraum verteilt. Unter der Schmelzfront wird die vordere Grenzfläche der sich durch den Hohlraum bewegenden Kunststoffschmelze verstanden.

Nach Ende des Spritzgussvorgangs und Aushärten des aufgeschäumten thermoplastischen Kunststoffs kann das Formteil dem Formwerkzeug entnommen werden. Im Bereich des mindestens einen Zuführkanals weist das Formteil dann einen Anguss aus der in dem Zuführkanal erstarrten Kunststoffschmelze auf, der vor der weiteren Verwendung des Formteils entfernt werden kann.

Bei dem Verfahren wird die Einspritzgeschwindigkeit, mit der die Kunststoffschmelze in den Hohlraum des Formwerkzeugs gespritzt wird, so eingestellt, dass der Innendruck der Kunststoffschmelze im Hohlraum in einem Bereich, der einem Abschnitt der Schmelzfront mit einem zeitlichen Abstand von höchstens 0,15 s nachfolgt, zumindest zu einem Zeitpunkt während des Spritzvorgangs größer ist als der kritische Druck des Treibmittels.

Bei Schaumspritzgussverfahren aus dem Stand der Technik fällt der Druck innerhalb der Kunststoffschmelze von der Einspritzöffnung aus relativ schnell ab, so dass das Treibmittel weit vor Erreichen der Schmelzfront in den unterkritischen Zustand gelangt. Dadurch beginnt die Kunststoffschmelze in relativ großem Abstand vor der Schmelzfront auszugasen, so dass sich im Bereich der Schmelzfront eine im Wesentlichen laminare Strömung der Kunststoffschmelze ergibt. Dies führt im Ergebnis zu einem laminaren und eher homogenen bzw. streifigen Erscheinungsbild der Oberfläche.

Bei Erfüllung des oben genannten Kriteriums für die Einspritzgeschwindigkeit wird der Bereich, in dem sich das Treibmittel in überkritischem Zustand in der Kunststoffschmelze befindet (überkritischer Bereich), nahe an die Schmelzfront herangeführt. Versuche haben gezeigt, dass bei einem zeitlichen Abstand von weniger als 0,15 s eine zumindest teilweise turbulente Strömung der Kunststoffschmelze im Bereich der Schmelzfront erreicht wird, wodurch sich eine optische Strukturierung der Oberfläche in Eisoptik ergibt. Die Versuche haben weiterhin gezeigt, dass bereits

bei einem zeitlichen Abstand des überkritischen Bereichs von mehr als 0,15 s zur Schmelzfront, keine Eisoptik mehr erzielt wird.

Der Innendruck der Kunststoffschmelze muss in dem betreffenden Bereich zumindest zu einem Zeitpunkt während des Spritzvorgangs größer sein als der kritische Druck des Treibmittels. Es hat sich herausgestellt, dass sich eine optische ansprechende Oberfläche mit Eisoptik bereits dann ergibt, wenn das zuvor beschriebene Kriterium für die Einspritzgeschwindigkeit zu einem Zeitpunkt während des Spritzvorgangs erfüllt ist. Dieser Zeitpunkt liegt vorzugsweise zu Beginn des Spritzvorgangs, und zwar insbesondere zu einem Zeitpunkt, zu dem weniger als 20 %, vorzugsweise weniger als 10 %, insbesondere weniger als 5 % des Hohlraums mit der Kunststoffschmelze ausgefüllt sind.

Es hat sich herausgestellt, dass die zu dem betreffenden Zeitpunkt erzeugten Turbulenzen im Bereich der Schmelzfront ausreichend beständig sind, sodass sie auch nach diesem Zeitpunkt fortbestehen und in der Kunststoffschmelze eine ansprechend optisch strukturierte Oberfläche ausbilden. Ein gleichmäßigeres, strukturiertes Erscheinungsbild der Oberfläche kann jedoch dadurch erreicht werden, dass das zuvor beschriebene Kriterium der Einspritzgeschwindigkeit über einen längeren Zeitraum, insbesondere über mehr als 25 %, vorzugsweise über mehr als 50 %, insbesondere über mehr als 75 % der gesamten Einspritzdauer erfüllt ist. Besonders bevorzugt wird das zuvor beschriebene Kriterium innerhalb des mindestens einen Zuführkanals erfüllt. Auf diese Weise kann die Eisoptik beim Formteil bereits ab dem Angusspunkt erreicht werden.

Die zuvor beschriebene Einstellung der Einspritzgeschwindigkeit kann auf verschiedene Arten durchgeführt werden. Beispielsweise können im Hohlraum des Formwerkzeugs Drucksensoren, insbesondere so genannte Werkzeuginnendrucksensoren, vorgesehen werden, mit denen der Innendruck der Kunststoffschmelze im Hohlraum während des Einspritzens an verschiedenen Stellen gemessen werden kann. Durch Veränderung der Einspritzgeschwindigkeit und Ermittlung des Druckprofils mit Hilfe der Sensoren kann dann ein konkreter Wert für die Einspritzgeschwindigkeit ermittelt werden, bei der das gewünschte Innendruckprofil in der Kunststoffschmelze erreicht wird. Geeignete Werkzeuginnendrucksensoren für diesen Zweck sind beispielsweise die von der Firma Kistler Instrumente GmbH, Ostfildern, Deutschland, erhältlichen Werkzeuginnendrucksensoren vom Typ 6183BCE.

Alternativ kann die zu wählende Einspritzgeschwindigkeit auch mittels einer rheologischen Simulation des Spritzvorgangs, insbesondere unter Einsatz eines Computers, bestimmt werden. Mit einer solchen Simulation kann für ein vorgegebenes Formwerkzeug und für eine vorgegebene Zusammensetzung der thermoplastischen Kunststoffschmelze das Innendruckprofil in der Kunststoffschmelze für verschiedene Einspritzgeschwindigkeiten berechnet werden. Anhand der berechneten Profile kann dann eine Einspritzgeschwindigkeit gewählt werden, bei der in der Simulation das gewünschte Innendruckprofil erreicht wird. Für die Durchführung einer solchen Simulation ist beispielsweise die von der Firma Autodesk Inc., San Rafael, USA, erhältliche rheologische Simulationssoftware "Autodesk (R) Simulation Moldflow (R)" geeignet. Ein konkretes Beispiel für eine rheologische Simulation des Einspritzvorgangs wird weiter unten im Zusammenhang mit den beigefügten Zeichnungen beschrieben.

Die zuvor beschriebene Aufgabe wird weiterhin erfindungsgemäß zumindest teilweise gelöst durch ein Formteil aus einem aufgeschäumten thermoplastischen Kunststoff, insbesondere hergestellt im Schaumspritzguss, vorzugsweise mit dem zuvor beschriebenen Verfahren, wobei das Formteil einen Oberflächenbereich mit einer durch den aufgeschäumten thermoplastischen Kunststoff gebildeten optischen Strukturierung aufweist, deren gemitteltes Verhältnis der Glanzgrade gemessen in Fließrichtung zu den Glanzgraden gemessen quer zur Fließrichtung unter 1,9, vorzugsweise unter 1,5, insbesondere unter 1,2 liegt.

Unter dem gemittelten Verhältnis der Glanzgrade gemessen in Fließrichtung zu den Glanzgraden quer zur Fließrichtung eines Formteils wird der Parameter verstanden, der mit dem anhand der nachfolgenden Messregeln beschriebenen Messverfahren bestimmt wird:

1. Als Messgeräte können alle optischen Messgeräte eingesetzt werden, die nach DIN 67530 messen.

2. Die Glanzgrade werden nach DIN 67530 mit einem Ein- und Ausfallwinkel von 60° gemessen.

3. Der zu untersuchende Oberflächenbereich des Formteils wird an sechs verschiedenen Messstellen vermessen.

4. Die Anordnung der Messstellen wird ausgehend vom Ansatzpunkt, d.h. von der Position des Angusses beim Spritzgießen, bestimmt. Weist das untersuchte Formteil mehrere Angusspunkte auf, so kann jeder Angusspunkt als Ausgangspunkt für die Bestimmung der Messbereiche dienen.

5. Als Maß für die Bestimmung der Messbereiche dient die maximale Fließweglänge. Die maximale Fließweglänge ist die Distanz zwischen dem Angusspunkt des Formteils und dem hiervon am weitesten entfernten Punkt (Fließendpunkt). Weist das untersuchte Formteil mehrere Angusspunkte auf, so kann auch die Bindenaht der Fließfronten von verschiedenen Angusspunkten als Fließendpunkt verwendet werden.

6. Je Angusspunkt muss die im Folgenden mit den Punkten 7. bis 9. beschriebene Messung durchgeführt werden.

7. Die Messbereiche ergeben sich wie folgt: zwei Messpunkte im Bereich 10 - 25 %, zwei Messpunkte im Bereich 40 - 60 % und zwei Messpunkte im Bereich 75 - 90 % der maximalen Fließweglänge

8. Im jeweiligen Messbereich müssen die einzelnen Messpunkte mindestens 25% der vorliegenden Fließwegbreite voneinander entfernt sein.

9. Je Messpunkt müssen mit dem Messgerät jeweils drei Glanzgradmessungen in Fließrichtung und quer zur Fließrichtung durchgeführt werden. Die Glanzgradmessungen erfolgen jeweils auf einer Messfläche von mindestens 7 x 7 mm.

10. Es werden für jede Messung i die Glanzgrade in Fließrichtung $G_{iFR,i}$ zu den Glanzgraden quer zur Fließrichtung $G_{qFR,i}$ ins Verhältnis gesetzt: $V_{G,i} = G_{iFR,i} / G_{qFR,i}$

11. Anschließend wird der Mittelwert aus allen zuvor ermittelten Glanzgradverhältnissen gebildet: $\overline{V_G} = \frac{1}{n}\sum_{i=1}^{n} V_{G,i}$. $\overline{V_G}$ ist das gemittelte Verhältnis der Glanzgrade gemessen in Fließrichtung zu den Glanzgraden quer zur Fließrichtung.

Die Bestimmung des Parameters erfolgt bevorzugt an ebenen Oberflächenbereichen. Für die Glanzgradmessung kann hierzu beispielsweise ein Messgerät vom Typ haze-gloss AG-4601, erhältlich von der Firma BYK-Gardner GmbH, Geretsried, Deutschland, verwendet werden. Der Parameter kann jedoch auch an leicht gekrümmten Oberflächenbereichen bestimmt werden. Für die Glanzgradmessungen kann dann ein hierzu geeignetes Messgeräts wie der Glanzmesser vom Typ ZGM 1020, erhältlich von der Firma Zehnter GmbH Testing Instruments, Sissach, Schweiz, eingesetzt werden.

Unter der Glanzgradmessung in Fließrichtung wird beim zuvor beschriebenen Messverfahren verstanden, dass die Schnittlinie der Ebene des einfallenden und ausfallenden Strahls bei der Reflektivitätsmessung mit der Formteiloberfläche im Messbereich im Wesentlichen parallel zur Bewegungsrichtung der Schmelzfront im Messbereich bei der Herstellung des Formteils verläuft. Unter der Messung quer zur Fließrichtung wird entsprechend verstanden, dass die Schnittlinie der Ebene des einfallenden und ausfallenden Strahls bei der Reflektivitätsmessung mit der Formteiloberfläche im Messbereich im Wesentlichen senkrecht zur Bewegungsrichtung der Schmelzfront im Messbereich bei der Herstellung des Formteils verläuft. Die Bewegungsrichtung der Schmelzfront ergibt sich beim Formteil dabei aus der Lage des Angusspunkts, von dem aus die Kunststoffschmelze in den Messbereich geflossen ist.

Formteile, die mit aus dem Stand der Technik bekannten Verfahren hergestellt wurden, zeigen aufgrund der im Wesentlichen laminaren Strömung der Kunststoffschmelze im Bereich der Schmelzfront eine Oberfläche mit einem streifigen Erscheinungsbild. Die Streifen verlaufen hierbei im Wesentlichen vom Anguss in Fließrichtung der Kunststoffschmelze, d.h. in Bewegungsrichtung der Schmelzfront während des Spritzvorgangs. Diese Streifen beeinflussen den richtungsabhängigen Glanzgrad der Formteiloberfläche, so dass der Glanzgrad in Fließrichtung, d.h. im Wesentlichen in Richtung der Streifen, höher ist als der Glanzgrad quer zur Fließrichtung. Das Glanzgradverhältnis ist bei diesen Formteilen daher größer als 2.

Demgegenüber weisen Formteile mit einer optisch ansprechend strukturierten Oberfläche in Eispoptik, wie sie insbesondere mit dem zuvor beschriebenen Verfahren herstellbar sind, ein Glanzgradverhältnis von höchstens 1,9, insbesondere von höchstens 1,5 bzw. sogar höchstens 1,2 auf. Durch die die Eisoptik hervorrufenden turbulenten optischen Strukturen der Oberfläche mitteln sich lokale Unterschiede in der Reflektivität heraus, so dass sich im Ergebnis in Fließrichtung und quer zur Fließrichtung ähnliche Glanzgrade und damit ein Glanzgradverhältnis näher bzw. nahe bei 1 ergeben. Über das Glanzgradverhältnis kann die optisch ansprechende strukturierte Oberfläche des erfindungsgemäßen Formteils damit objektiv charakterisiert werden.

Der Oberflächenbereich des Formteils weist eine durch den aufgeschäumten thermoplastischen Kunststoff gebildete optische Strukturierung auf. Unter einer optischen Strukturierung wird verstanden, dass die optischen Eigenschaften des Oberflächenbereichs nicht über den gesamten Oberflächenbereich konstant sind, sondern dass zumindest eine optische Eigenschaft der Oberfläche im Oberflächenbereich, insbesondere der lokale Glanzgrad der Oberfläche, über den Oberflächenbereich variiert. Die optische Strukturierung wird durch den aufgeschäumten thermoplastischen Kunststoff gebildet. Hierdurch wird klargestellt, dass sich die optische Strukturierung bereits durch den aufgeschäumten thermoplastischen Kunststoff selbst ergibt und nicht etwa durch eine Kaschierung in Form einer zusätzlichen, optisch

strukturierten Schicht, beispielweise durch eine Folie oder eine Farbschicht. Vorzugsweise wird der Oberflächenbereich unmittelbar durch den aufgeschäumten thermoplastischen Kunststoff gebildet. Über dem thermoplastischen Kunststoff kann jedoch auch eine im Wesentlichen transparente Schicht angeordnet werden, wobei die optische Strukturierung der Oberfläche weiterhin durch den aufgeschäumten thermoplastischen Kunststoff gebildet wird.

Im Folgenden werden weitere Ausführungsformen des Verfahrens bzw. des Formteils beschrieben. Die Merkmale dieser Ausführungsformen sind dabei nicht auf das Verfahren bzw. das Formteil beschränkt; vielmehr können nachfolgend für das Verfahren beschriebene Merkmale auf das Formteil entsprechend übertragen werden und umgekehrt.

Bei einer Ausführungsform des Verfahrens folgt der Bereich, in dem der Innendruck der Kunststoffschmelze zumindest zu einem Zeitpunkt während des Spritzvorgangs größer ist als der kritische Druck des Treibmittels, dem Abschnitt der Schmelzfront mit einem zeitlichen Abschnitt von höchstens 0,1 s, insbesondere von höchstens 0,05 s nach. Es wurde festgestellt, dass bei einem zeitlichen Abstand des Bereichs von der Schmelzfront von höchstens 0,15 s eine optisch ansprechende Oberflächenstrukturierung in Teilbereichen des Formteils erreicht wird. Werden die entsprechenden zeitlichen Abstände noch kürzer gewählt, vorzugsweise kürzer 0,1 s und insbesondere kürzer als 0,05 s, so kann im Wesentlichen auf der gesamten Formteilfläche eine entsprechend ansprechende Oberflächenstrukturierung in Eisoptik erreicht werden.

Bei einer weiteren Ausführungsform des Verfahrens bzw. des Formteils ist der thermoplastische Kunststoff ein transparenter Kunststoff, insbesondere ein transparenter Kunststoff, der aus folgender Gruppe ausgewählt ist oder zumindest einen Kunststoff dieser Gruppe umfasst: Polycarbonate (PC), Polystyrole (PS), Polymethylmethacrylate (PMMA), Styrol-Acrylnitrile (SAN), Cyclo-Olefin-Copolymere (COC), transparente Polyamide (PA) wie beispielsweise PA MACMI 12, PA NDT/INDT, PA MACM 12, PA MACM 14, PA PACM 12, PA 6I, PA 6I/6T, transparente Polyester wie beispielsweise A-PET (amorphes PET, PET mit 5% Cyclohexanedimethanol oder Neopentyl glycol), PEN (Polyethylen naththalat), PTT (Polytrimethylenterephthalat), PETG (Terephthalsäure; Ethylen glycol / Cyclohexanedimetanol), Polyester aus Terephthalsäure mit Cyclohexanedimetanol und Tetramethyl-cyclobutanediol oder Mischungen aus diesen Polymeren. Bei Verwendung eines transparenten Kunststoffs bleibt die Oberfläche des hergestellten Formteils zumindest teilweise transparent, sodass auch tiefer liegende Strukturen der Oberfläche von außen sichtbar sind. Auf diese Weise wird die Dichte der an der Oberfläche sichtbaren Strukturen erhöht und damit eine Oberflächenstrukturierung mit realistisch erscheinender Eisoptik geschaffen. Der thermoplastische Kunststoff hat bevorzugt eine Transparenz mit einer Lichttransmission gemessen nach ISO 13468-2 bei 1 mm Dicke von mindestens 25 %, bevorzugt mindestens 50 %, besonders bevorzugt mindestens 75 %, insbesondere mindestens 86 %.

Bei einer weiteren Ausführungsform des Verfahrens bzw. des Formteils ist der thermoplastische Kunststoff aus folgender Gruppe ausgewählt oder umfasst zumindest einen Kunststoff dieser Gruppe: Polycarbonate (PC), Polystyrole (PS), Polymethylmethacrylate (PMMA), Styrol-Acrylnitril (SAN), Polymere aus der Gruppe der COCs (Cyclo-Olefin-Copolymere), transparente Polyamide (PA), Polyvinylchloride (PVC), Polyphenylenether (PPE) oder eine Mischung davon.

Besonders gute Ergebnisse für die optisch ansprechende Oberflächenstrukturierung wurden mit den im Folgenden beschriebenen Polycarbonat-Zusammensetzungen erzielt:
Polycarbonate im Sinn der vorliegenden Erfindung sind sowohl Homopolycarbonate, Copolycarbonate als auch Polyestercarbonate wie sie beispielsweise in EP-A 1,657,281 beschrieben sind.

Die Herstellung aromatischer Polycarbonate erfolgt z. B. durch Umsetzung von Diphenolen mit Kohlensäurehalogeniden, vorzugs¬weise Phosgen und/oder mit aro-matischen Dicarbonsäuredihaloge¬niden, vorzugsweise Benzoldicarbonsäuredihalo-geniden, nach dem Phasengrenzflächenverfahren, gegebenenfalls unter Verwen¬dung von Kettenabbrechern, beispielsweise Monophenolen und gegebe¬nenfalls unter Ver-wendung von trifunktionellen oder mehr als trifunktionellen Verzweigern, bei¬spiels-weise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Die Herstellung der erfindungsgemäß zu verwendenden Polycarbonate erfolgt prinzipiell in bekannter Weise aus Diphenolen, Kohlensäurederivaten und gegebenenfalls Verzweigern.

Allgemein sind Verfahren zur Polycarbonatsynthese bekannt und in zahlreichen Publikationen beschrieben. EP-A 0 517 044, WO 2006/072344, EP-A 1 609 818, WO 2006/072344 und EP-A 1 609 818 und dort zitierte Dokumente beschreiben beispielsweise das Phasengrenzflächen und das Schmelzeverfahren zur Herstellung von Polycarbonat.

Diphenole zur Herstellung der aromatischen Polycarbonate und/¬oder aromatischen Polyestercarbonate sind vorzugsweise solche der Formel (I)

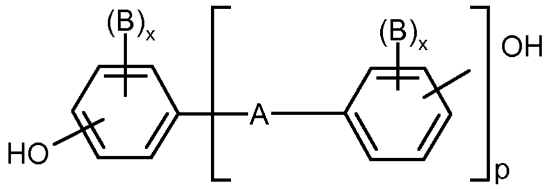

(I),

wobei

A eine Einfachbindung, C1 bis C5-Alkylen, C2 bis C5-Alkyliden, C5 bis C6-Cycloalkyli¬den, -O-, -SO-, -CO-, -S-, -SO2-, C6 bis C12-Arylen, an das weitere aromatische ge¬ge¬benenfalls Heteroatome enthaltende Ringe kon¬densiert sein können,
oder ein Rest der Formel (II) oder (III)

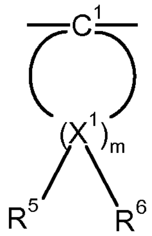

(II)

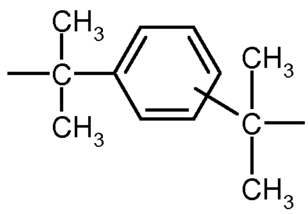

(III)

B jeweils C1 bis C12-Alkyl, vorzugsweise Methyl, Halogen, vorzugsweise Chlor und/oder Brom

x jeweils unabhängig voneinander 0, 1 oder 2,

p 1 oder 0 sind, und

R5 und R6 für jedes X1 individuell wählbar, unabhängig voneinander Wasserstoff oder C1 bis C6-Alkyl, vorzugsweise Wasserstoff, Methyl oder Ethyl,

X1 Kohlenstoff und

m eine ganze Zahl von 4 bis 7, bevorzugt 4 oder 5 bedeuten, mit der Maßgabe, dass an mindestens einem Atom X1, R5 und R6 gleichzeitig Alkyl sind.

Bevorzugte Diphenole sind Hydrochinon, Resorcin, Dihydroxydiphenole, Bis-(hydroxyphenyl)-Cl C5-alkane, Bis-(hydroxyphenyl)-C5-C6-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha'$-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydrox¬yphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxy-phe¬nyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Poly¬carbonate geeig¬nete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trime¬thylpentyl)]-phenol, 4-(1,3-Tetrame¬thyl¬butyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate haben mittlere Molekulargewichte (Gewichtsmittel Mw, gemessen durch GPC (Gelpermeationschromatographie mit Polycarbonatstandard) von 10.000 bis 200.000 g/mol, vorzugsweise 15.000 bis 80.000 g/mol, besonders bevorzugt 20.000 bis 38.000 g/mol.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionel¬len oder mehr als dreifunktionellen Verbindungen, beispielsweise solchen mit drei und mehr phenoli¬schen Gruppen. Bevorzugt werden lineare Polycarbonate, weiter bevorzugt auf Basis von Bisphenol-A, eingesetzt.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Ebenfalls geeignet sind polydiorganosiloxanhaltige Copolycarbonate; die Herstellung der polydiorganosiloxanhaltiger Copolycar¬bonate ist beispielsweise in der DE-A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen, ins-besondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C1 bis C22-Alkylgruppen oder durch Halogenatome substituiert sein können, sowie aliphatische C2 bis C22-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Bei der Herstellung von aromatischen Polyestercarbonaten kann zusätzlich eine oder mehrere aromatische Hydroxycarbonsäu¬re eingesetzt werden.

Die aromatischen Polyestercarbonate können sowohl linear als auch in bekannter Weise verzweigt sein (siehe dazu DE-A 2 940 024 und DE-A 3 007 934), wobei lineare Polyestercabonate bevorzugt sind.

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenontetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dime¬thyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxy¬phenyl)-ethan, Tri-(4-hydroxyphenyl)-phenylmethan, 2,2-Bis[4,4-bis(4-hydroxyphenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihy-droxyphenyl)-propan, Tetra-(4-[4-hydroxy¬phenyl-isopro¬pyl]-phenoxy)-methan, 1,4-Bis[4,4'-dihy-droxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt werden; Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die thermoplastischen, aromatischen Polycarbonate und Polyestercarbonate können allein oder im beliebigen Gemisch eingesetzt werden.

Bei einer weiteren Ausführungsform des Verfahrens wird die Kunststoffschmelze durch Einleiten eines Gases, insbesondere von Stickstoff oder Kohlenstoffdioxid, in die Kunststoffschmelze mit einem Treibmittel physikalisch beladen.

Das physikalische Beladen mit einem Treibmittel ist bei dem Verfahren bevorzugt, da auf diese Weise ein Abbau des Kunststoffs, insbesondere des Polycarbonats, durch chemisches Treibmittel sowie eine Verfärbung, insbesondere eine gelbliche Verfärbung, der Kunststoffschmelze durch Reststoffe des Treibmittels bzw. durch den Kunststoffabbau vermieden werden kann.

Alternativ kann die Kunststoffschmelze auch chemisch mit einem Treibmittel beladen werden, indem dem thermoplastischen Kunststoff ein Treibmitteledukt zugegeben wird, welches in der Kunststoffschmelze dann das gasförmige Treibmittel bildet, beispielsweise mittels einer durch Wärmeeinwirkung induzierten chemischen Reaktion. Das Treibmitteledukt kann dem Kunststoffgranulat vor dem Aufschmelzen oder auch der Kunststoffschmelze selbst zugegeben werden, zum Beispiel als Pulver, Granulat oder auch in flüssiger Form. Beispiele für solche chemischen Treibmittel sind 5-Phenyltetrazol (erhältlich zum Beispiel als Tracel IM 2240 Standard von der Firma TRAMACO GmbH, Pinneberg, Deutschland) oder eine Zubereitung aus Polycarbonsäure und Carbonkomponenten (erhältlich zum Beispiel als Hydrocerol ITP 833 von Clariant International Ltd., Muttenz, Schweiz).

Die Treibmittelkonzentration beträgt vorzugsweise mindestens 0.01 Gew.-%.

Bei einer weiteren Ausführungsform des Verfahrens beträgt die Konzentration des Treibmittels in der mit Treibmittel beladenen Kunststoffschmelze vor dem Einspritzen in den Hohlraum für chemische Treibmittel 0,5 bis 3 Gew.-% und für physikalische Treibmittel 0,2 bis 1,0 Gew.-%.

Bei einer weiteren Ausführungsform des Verfahrens ist das Formwerkzeug so ausgebildet, dass der Hohlraum in Fließrichtung der Kunststoffschmelze Querschnittsverjüngungen von höchstens 10%, vorzugsweise keine Querschnittsverjüngungen aufweist. Unter Querschnittsverjüngungen werden Reduzierungen des Hohlraumquerschnitts in Fließrichtung der Kunststoffschmelze verstanden. Eine solche Querschnittsverjüngung kann zu einer Laminarisierung des thermoplastischen Kunststoffs im Bereich der Schmelzfront führen, so dass hinter der Querschnittsverjüngung keine strukturierte Oberfläche in Eisoptik mehr gebildet wird. Da die Kunststoffschmelze natürlich nur bis zum Rand des Hohlraums fließt, bleibt die abschließende Verjüngung des Querschnitts am Rand des Hohlraums hierbei außer Acht.

Das Formwerkzeug ist vorzugsweise so ausgebildet, dass der Hohlraum beim Übergang vom Zuführkanal zum Formteilbereich des Hohlraums (d.h. am Angusspunkt des herzustellenden Bauteils) eine starke Querschnittvergrößerung von mindestens 25 %, vorzugsweise mindestens 50 %, aufweist. Durch eine solche Querschnittsvergrößerung wird ein schneller Druckabfall im Bereich der Schmelzfront begünstigt, so dass das Erfüllen des oben beschriebenen Kriteriums für das Innendruckprofil der Kunststoffschmelze an dem Übergang begünstigt wird. Um einen schnellen Druckabfall weiter zu begünstigen, kann der Querschnitt beim Übergang vom Zuführkanal zum Formteilbereich besonders bevorzugt um mindestens 150 %, insbesondere um mindestens 250 % zunehmen.

Bei einer weiteren Ausführungsform des Verfahrens ist das Formwerkzeug für einen Filmanguss oder für einen Direktanguss ausgebildet. Unter einem Filmanguss wird ein Anguss verstanden, dessen Querschnitt in Richtung des eigentlichen Formteils zunimmt. Ein solcher Anguss entsteht, wenn der Querschnitt des Zuführkanals zumindest in einem letzten Abschnitt bis zum Formteilbereich des Hohlraums in einer Richtung stark zunimmt, so dass sich eine breite Fließfront der thermoplastischen Kunststoffschmelze ergibt.. Ein Direktanguss entsteht, wenn der Querschnitt des Zuführkanals im Wesentlichen konstant ist bzw. nur geringfügig zunimmt. Weist das Formwerkzeug mehrere Zuführkanäle auf, so können sämtliche Zuführkanäle für einen Filmanguss oder sämtliche Zuführkanäle für einen Direktanguss ausgebildet sein. Weiterhin ist auch eine Kombination von für den Filmanguss und für den Direktanguss ausgebildeten Zuführkanälen möglich. Beim Filmanguss erfolgt bereits eine starke Querschnittsvergrößerung im Bereich des Zuführkanals, so dass das Erfüllen des oben genannten Kriteriums für das Innendruckprofil der Kunststoffschmelze bereits im Zuführkanal begünstigt wird. Beim Direktanguss erfolgt eine starke Querschnittsvergrößerung beim Übergang vom Zuführkanal zum Formteilbereich, so dass das Erfüllen des oben genannten Kriteriums für das Innendruckprofil der Kunststoffschmelze im Bereich des Angusspunkts begünstigt wird.

Bei einer weiteren Ausführungsform des Formteils umfasst der Oberflächenbereich mit der durch den aufgeschäumten thermoplastischen Kunststoff gebildeten optischen Oberflächenstrukturierung einen Anteil von mindestens 30 % der Gesamtoberfläche des Formteils. Mit der vorliegenden Erfindung, insbesondere auch mit dem zuvor beschriebenen Verfahren, können die Parameter zur Erzeugung einer solchen, optisch strukturierten Oberfläche in Eisoptik gezielt eingestellt werden, sodass im Wesentlichen beliebige, insbesondere auch große Teile der Formteiloberfläche mit einer ansprechenden strukturierten Oberfläche in Eisoptik ausgebildet werden können. Vorzugsweise beträgt der entsprechende Oberflächenbereich mindestens 50 % oder weiter bevorzugt mindestens 70 % der Gesamtoberfläche des Formteils.

Bei einer weiteren Ausführungsform des Formteils weist das Formteil eine Dicke im Bereich von 1 bis 20 mm, bevorzugt von 2 bis 12 mm, insbesondere von 2 bis 8 mm, auf. Durch eine Mindestdicke von 1, bevorzugt von 2 mm kann eine stabile turbulente Strömung innerhalb der Kunststoffschmelze erreicht werden, sodass sich großflächig eine

ansprechend strukturierte Oberfläche ausbilden kann. Bei geringeren Formteildicken hat es sich als schwierig herausgestellt, ein turbulentes Fließverhalten der Kunststoffschmelze über größere Flächenbereiche zu erreichen.

Die zuvor beschriebene Aufgabe wird weiterhin erfindungsgemäß zumindest teilweise gelöst durch die Verwendung eines zuvor beschriebenen Formteils als Bauteile für Möbelstücke oder Beleuchtungselemente, Produktcasings, insbesondere Handycover, als Becher, Schalen und Abdeckungen, Kühlboxen bzw. Verkleidungsteile für Kühlboxen, als Mehrwegbehälter für Kälte- und Frischeprodukte, insbesondere für den Logistikbereich.

Weitere Merkmale und Vorteile des Verfahrens, des Formteils und seiner Verwendung ergeben sich aus der nachfolgenden Beschreibung mehrerer Ausführungsbeispiele, wobei auf die beigefügte Zeichnung Bezug genommen wird.

In der Zeichnung zeigen

| | |
|---|---|
| Fig. 1 | eine Vorrichtung zur Durchführung eines Verfahrens gemäß einem Ausführungsbeispiel des erfindungsgemäßen Verfahrens in schematischer Darstellung, |
| Fig. 2a | ein Formwerkzeug der Vorrichtung aus Fig. 1, dargestellt während des Einspritzens einer Kunststoffschmelze bei Durchführung eines Ausführungsbeispiels des erfindungsgemäßen Verfahrens, |
| Fig. 2b | eine vergrößerte Detaildarstellung aus Figur 2a, |
| Fig. 3a-b | eine Darstellung eines Formwerkzeug-Hohlraums für ein plattenförmiges Formteil in Aufsicht und im Querschnitt, |
| Fig. 4a-b | eine Darstellung eines Formwerkzeug-Hohlraums für ein schüsselförmiges Formteil in Aufsicht und im Querschnitt, |
| Fig. 5 | ein Diagramm mit simulierten Innendruckprofilen im Formwerkzeug aus Fig. 3a-b für verschiedene Einspritzgeschwindigkeiten, |
| Fig. 6 | ein Diagramm mit simulierten Innendruckprofilen im Formwerkzeug aus Fig. 4a-b für verschiedene Einspritzgeschwindigkeiten und |
| Fig. 7a-b | eine Abbildung einer Formteiloberfläche eines erfindungsgemäßen Formteil sowie eines Vergleichsformteils. |

Figur 1 zeigt eine Vorrichtung für den Schaumspritzguss, wie sie beispielsweise zur Durchführung eines Verfahrens gemäß einem Ausführungsbeispiel des erfindungsgemäßen Verfahrens eingesetzt werden kann.

Die Vorrichtung 2 umfasst einen Schneckenförderer 4 mit einem als Hohlzylinder ausgebildeten Förderrohr 6 und einer in dem Förderrohr 6 drehbar gelagerten, angetriebenen Transportschnecke 8. Die Vorrichtung 2 weist weiterhin einen Einfüllstutzen 10 zum Einfüllen eines Kunststoffgranulats 12 auf. Das Granulat 12 wird mit der Transportschnecke 8 vom Einfüllbereich in einen Schmelzbereich 14 transportiert, in dem Heizelemente 16 vorgesehen sind, um den Kunststoff im Förderrohr 6 auf eine Temperatur oberhalb seiner Schmelztemperatur zu erwärmen und so eine Kunststoffschmelze 18 zu erzeugen. Die Kunststoffschmelze 18 wird im Förderrohr 6 weiter in einem Bereich vor der Transportschnecke 8 transportiert, in dem ein Treibmitteleinlass 20 angeordnet ist, durch den ein Treibmittel 22 (beispielsweise Kohlenstoffdioxid oder Stickstoff) in die Kunststoffschmelze 18 im Förderrohr 6 eingebracht werden kann. Zur Durchführung des Einspritzvorgangs wird die Transportschnecke 8 translatorisch in Richtung der Einspritzöffnung bewegt, so dass die mit dem Treibmittel 22 beladene Kunststoffschmelze 18 durch eine Einspritzöffnung 24 in den Hohlraum 26 eines Formwerkzeugs 28 gespritzt wird. Die Kunststoffschmelze 18 breitet sich sodann hinter einer durch den Hohlraum 26 laufenden Schmelzfront aus und füllt den Hohlraum 26 dabei aus. Während dieses Einspritzvorgangs schäumt die mit dem Treibmittel beladene Kunststoffschmelze 18 aufgrund des Treibmittels auf.

Die Figuren 2a und 2b zeigen das Formwerkzeug 28 der Vorrichtung 2 aus Fig. 1 im Querschnitt von der Seite während des Einspritzens einer Kunststoffschmelze bei Durchführung eines Ausführungsbeispiels des erfindungsgemäßen Verfahrens. Figur 2b zeigt dabei eine vergrößerte Detaildarstellung aus Fig. 2a.

Der Hohlraum 26 des Formwerkzeugs 28 umfasst einen Zuführkanal 30, der vorliegend für einen Filmanguss ausgebildet ist, sowie einen Formteilbereich 32, der der äußeren Form des herzustellenden Formteils entspricht.

Bei der Durchführung des Verfahrens wird die mit Treibmittel beladene Kunststoffschmelze 18 durch die Einspritzöffnung 24 in den Hohlraum 26 gespritzt. Die Kunststoffschmelze füllt den Hohlraum 26 dann hinter einer durch den Hohlraum 26 laufenden Schmelzfront 34 aus, und zwar zunächst im Bereich des Zuführkanals 30 und dann im Formteilbereich 32 des Hohlraums. Das Einspritzen der Kunststoffschmelze 18 in den Hohlraum 26 erfolgt unter Druck,

wobei sich vom Ort der Einspritzöffnung 24 bis zur Schmelzfront 34 ein Druckgefälle einstellt. In dem Bereich der Kunststoffschmelze 18, in dem der Innendruck oberhalb des kritischen Drucks des Treibmittels liegt, befindet sich das Treibmittel in überkritischer Lösung mit der Kunststoffschmelze 18. Da der Innendruck von der Einspritzöffnung 24 zur Schmelzfront 34 abnimmt, unterschreitet der Innendruck der Kunststoffschmelze 18 den kritische Druck des Treibmittels an einer Stelle 36, sodass das sich Treibmittel zwischen dieser Stelle 36 und der Schmelzfront 34 nicht mehr in überkritischer Lösung mit der Kunststoffschmelze 18 befindet und daher unter Bildung von Gasbläschen 38 ausgast.

Die Einspritzgeschwindigkeit, das heißt die Geschwindigkeit, mit der die Transportschnecke 8 in Richtung der Einspritzöffnung 24 bewegt wird, um die Kunststoffschmelze 18 in die Einspritzöffnung 24 zu spritzen, wird so eingestellt, dass ein Bereich 40, in dem die Kunststoffschmelze noch einen Innendruck aufweist, der größer ist als der kritische Druck des Treibmittels, und in dem sich das Treibmittel daher in überkritischem Zustand befindet, von der Schmelzfront 34 einen zeitlichen Abstand von höchstens 0,15 s aufweist. Dieser zeitliche Abstand entspricht einer räumlichen Strecke, die von der Schmelzfront 34 innerhalb von 0,15 s zurückgelegt wird.

Versuche haben gezeigt, dass es bei einem solch geringen Abstand zwischen dem Bereich 40 mit überkritischem Treibmittel und der Schmelzfront 34 zu turbulenten Strömungen im Bereich der Schmelzfront 34 kommt, so dass das hergestellte Formteil eine ästhetische optisch strukturierte Oberfläche in Eisoptik aufweist.

Die Figuren 3a-b zeigen eine schematische Darstellung eines Formwerkzeug-Hohlraums 50 für ein plattenförmiges Formteil in Aufsicht (Fig. 3a) und im Querschnitt (Fig. 3b). Der Hohlraum 50 umfasst einen Formteilbereicht 52 und einen Zuführkanal 54. Der Zuführkanal 54 erstreckt sich von einer Einspritzöffnung 56, durch die beim Einspritzvorgang die Kunststoffschmelze in das Formwerkzeug eingespritzt wird, zunächst in einem rohrförmigen Abschnitt 58 und dann in einem sich stetig aufweitenden, flachen Abschnitt 60 bis zum Formteilbereich 52. Der Querschnitt des Zuführkanals 54 nimmt im flachen Abschnitt 60 bis zum Formteilbereich 52 erheblich in der Breite zu, sodass sich beim Einspritzen der Kunststoffschmelze eine gleichmäßige, breite Schmelzfront ausbildet. Ein mit einem solchen Zuführkanal erzeugter Anguss wird auch als Filmanguss bezeichnet. Nach einer kleinen Querschnittsverjüngung 62, die unter anderem auch dazu dient, den erstarrten Angussbereich der Kunststoffschmelze einfacher von dem eigentlichen Formteil entfernen zu können, nimmt der Querschnitt beim Übergang vom Zuführkanal 54 auf den Formteilbereich 52 sprunghaft zu. Dies wird insbesondere durch eine geringere Breite des Zuführkanals 54 gegenüber dem Formteilbereich 52 beim Übergang sowie durch die kurzfristige Querschnittsverjüngung 62 begünstigt. Der Übergang des Zuführkanals 54 zum Formteilbereich 52 wird bei dem mit dem Hohlraum 50 hergestellten Formteil im Stand der Technik allgemein als Angusspunkt 64 bezeichnet (auch wenn der Übergang vorliegend einer rechteckigen Fläche mit großem Seitenverhältnis entspricht).

Die Maße des in den Fig. 3a-b dargestellten, beispielhaften Hohlraums 50 sind in der Tabelle 1 angegeben:

Tabelle 1: Hohlraumgeometrie für das plattenförmige Formteil

| **Größe** | **Maß** |
|---|---|
| Höhe des Formteilbereichs (Wanddicke) | 3,5 mm |
| Breite des Formteilbereichs (quer zur Fließrichtung der Kunststoffschmelze im Anguss) | 150,0 mm |
| Länge des Formteilbereichs (in Fließrichtung der Kunststoffschmelze im Anguss) | 200,0 mm |
| Breite des Zuführkanals beim Übergang zum Formteilbereich | 120,0 mm |
| Querschnittsvergrößerung beim Übergang zum Formteilbereich | 75% |

Beim Einspritzvorgang füllt die in die Einspritzöffnung 56 eingespritzte Kunststoffschmelze den Hohlraum 50 hinter einer durch den Hohlraum 50 laufenden Schmelzfront 66 aus. Die Schmelzfront 66 läuft hierbei zunächst durch den rohrförmigen Abschnitt 58 und dann durch den flachen Abschnitt 60 des Zuführkanals 54, bevor sie dann durch den Formteilbereich 52 läuft. In den Figuren 3a-b ist die Lage der Schmelzfront 66 exemplarisch für einen Zeitpunkt eingezeichnet, zu dem die Schmelzfront 66 bereits in den Formteilbereich 52 eingetreten ist.

Die Figuren 4a-b zeigen eine schematische Darstellung eines Formwerkzeug-Hohlraums 70 für ein schüsselförmiges Formteil in Aufsicht (Fig. 4a) und im Querschnitt (Fig. 4b). Der Hohlraum 70 umfasst einen Formteilbereich 72 und einen Zuführkanal 74. Der Zuführkanal 74 erstreckt sich von einer Einspritzöffnung 76, durch die beim Einspritzvorgang die Kunststoffschmelze in das Formwerkzeug eingespritzt wird, in einem sich leicht konisch erweiternden, rohrförmigen Abschnitt 78 bis zum Formteilbereich 72. Ein durch einen solchen Zuführkanal 74 erzeugter Anguss wird auch als Direktanguss bezeichnet. Der Übergang des Zuführkanals 74 zum Formteilbereich 72 erfolgt im Wesentlichen quer zu einem Wandabschnitt des Formteilbereichs 72, d.h. quer zu einem Bereich, der eine Wand des gespritzten Formteils ausformt. Dadurch nimmt der Querschnitt nach einer bereits leichten Querschnittszunahme im konischen Abschnitt 78 beim Übergang vom Zuführkanal 74 zum Formteilbereich 72 sprunghaft zu. Der Übergang des Zuführkanals

74 zum Formteilbereich 72 wird bei dem mit dem Hohlraum 70 hergestellten Formteil als Angusspunkt 80 bezeichnet. Der Formteilbereich 72 umfasst einen Bodenbereich 82 und einen Randbereich 84, die jeweils den Boden bzw. den Rand der mit dem Hohlraum 70 herstellbaren Schüssel ausformen.

Die Maße des in den Fig. 4a-b dargestellten, beispielhaften Hohlraums 70 sind in der Tabelle 2 angegeben:

Tabelle 2: Hohlraumgeometrie für das schüsselförmige Formteil

| **Größe** | **Maß** |
|---|---|
| Durchmesser des Bodenbereichs | **112** mm |
| Größter Durchmesser des Randbereichs | **170** mm |
| Höhe des Randbereichs (vom Bodenbereich bis zum oberen Schüsserand) | **70** mm |
| Wanddicke des Bodenbereichs (am Angusspunkt) | **4,8** mm |
| Geringste Wanddicke des Randbereichs | **3** mm |
| Durchmesser des Zuführkanals beim Angusspunkt | **9** mm |
| Querschnittsvergrößerung beim Übergang zum Formteilbereich | **113** % |

Beim Einspritzvorgang füllt die in die Einspritzöffnung 76 eingespritzte Kunststoffschmelze den Hohlraum 70 hinter einer durch den Hohlraum 70 laufenden Schmelzfront 86 aus. Die Schmelzfront 86 läuft hierbei zunächst durch den Zuführkanal 74, bevor sie dann durch den Formteilbereich 72 läuft. In den Figuren 4a-b ist die Lage der Schmelzfront 86 exemplarisch für einen Zeitpunkt eingezeichnet, zu dem die Schmelzfront 86 bereits in den Formteilbereich 72 eingetreten ist.

Für die in den Fig. 3a-b und 4a-b dargestellten Formwerkzeug-Hohlräume 50, 70 wurden jeweils rheologische Simulationen für Einspritzvorgänge bei verschiedenen Einspritzgeschwindigkeiten durchgeführt, um das Innendruckprofil der Kunststoffschmelze beim Einspritzvorgang zu bestimmen.

Die rheologischen Simulationen wurden dabei jeweils wie folgt durchgeführt:

Für die Berechnungen der Einspritzsimulationen wurde das Programm "Autodesk(R) Simulation Moldflow(R) Insight 2013 FCS - lantanum_fcs" verwendet. Hierzu wurden zunächst die in den Fig. 3a-b und 4a-b dargestellten Formwerkzeug-Hohlräume 50, 70 mit den angegebenen Abmessungen in dem Computerprogramm abgebildet.

Für die Simulation der Einspritzvorgänge wurden dann weiterhin folgende Parameter festgelegt:

Als für die Simulation zu verwendender Kunststoff wurde das Polycarbonat Makrolon AL2647, erhältlich von der Bayer Material Science AG, Leverkusen, Deutschland, ausgewählt. Für die Simulation dieses Kunststoffs wurden die Materialparameter aus der von der Bayer Material Science AG, Leverkusen, Deutschland, für die Nutzer insbesondere dieses Computerprogramms zur Verfügung gestellten Materialdatenbankdatei für Makrolon AL2647 verwendet.

Insbesondere wurde für die Simulation der Viskosität $\eta$ (in Pa·s) der Kunststoffschmelze das Cross-WLF Viskositätsmodel mit der Formel

$$\eta = \frac{\eta_0}{1+\left(\frac{\eta_0 \dot{\gamma}}{\tau^*}\right)^{1-n}}, \qquad (1)$$

verwendet, wobei

$$\eta_0 = D_1 \exp\left(-\frac{A_1(T-T^*)}{A_2+(T-T^*)}\right), \qquad (2)$$

und T die Temperatur (in K), $T^* = D_2 + D_3p$ die Glasübergangstemperatur (in K), $A_2 = A_3 + D_3p$, p der Druck (in Pa) und $\dot{\gamma}$ die Scherrate (in $s^{-1}$) ist und wobei die einzelnen Parameter entsprechend der Tabelle 3 gewählt wurden:

Tabelle 3: Parameter für das Cross-WLF Viskositätsmodell

| Parameter | Wert |
|---|---|
| n | 0,1555 |
| $\tau^*$ | 740472 Pa |
| $D_1$ | 5.45517e+11 Pa·s |
| $D_2$ | 417.15 K |
| $D_3$ | 0 K/Pa |
| $A_1$ | 28,056 |
| $A_2$ | 51.6 K |

Für das thermodynamische Verhalten der Kunststoffschmelze, d.h. für die Abhängigkeit des spezifischen Volumens v der Kunststoffschmelze von der Temperatur T (in K) und dem Druck p (in Pa) wurde ein 2-Domänen Tait pvT Model verwendet mit der Formel

$$v(T,p) = v_0(T)\left(1 - C\ln\left(1 + \frac{p}{B(T)}\right)\right) + v_t(T,p)\,, \qquad (3)$$

wobei $v_0 = b_{1m} + b_{2m}(T - b_5)B(T) = b_{3m}\exp(-b_{4m}(T-b_5))v_t(T, p) = 0$ für $T>T_t$ und $v_0 = b_{1s} + b_{2s}(T-b_5)B(T) = b_{3s}\exp(-b_{4s}(T-b_5))v_t(T, p) = b_7\exp(b_8(T-b_5)-b_9p)$ für $T \leq T_{t,}$, wobei $T_t(p)=b_5+b_6p$, wobei C=0,0894 und wobei die einzelnen Parameter entsprechend der Tabelle 4 gewählt wurden:

Tabelle 4: Parameter für das 2-Domänen Tait pvT-Modell

| Parameter | Wert |
|---|---|
| $b_5$ | 427,97 K |
| $b_6$ | 2,487e-7 K / Pa |
| $b_{1m}$ | 0,008738 $m^3$/kg |
| $b_{2m}$ | 6,497e-7 $m^3$/(kg K) |
| $b_{3m}$ | 8,86889e+7 Pa |
| $b_{4m}$ | 0,003935 $K^{-1}$ |
| $b_{1s}$ | 0,0008738 $m^3$/kg |
| $b_{2s}$ | 2,927e-7 $m^3$/(kg K) |
| $b_{3s}$ | 1,00166e+8 Pa |
| $b_{4s}$ | 0,001681 $K^{-1}$ |
| $b_7$ | 0 $m^3$/kg |
| $b_8$ | 0 $K^{-1}$ |
| $b_9$ | 0 $Pa^{-1}$ |

Weiterhin wurden für die Simulationen die Werte für die Dichte der Schmelze von 1,0329 g/$cm^3$ und für die Dichte im festen Zustand von 1,1965 g/$cm^3$ für das Makrolon AL2647 angegeben.

Das Treibmittel (vorliegend Stickstoff) wurde bei den Simulationen der Einfachheit halber nicht berücksichtigt, da sich in Versuchen herausgestellt hat, dass die Simulationen auch ohne Berücksichtigung des Treibmittels aussagekräftige und vergleichbare Ergebnisse für die Innendruckverteilung liefert.

Die weiteren Parameter für die Durchführung der Simulationen sind in der folgenden Tabelle 5 angegeben:

Tabelle 5: Weitere Parameter für die Simulationen

| Prozessparameter | Wert |
|---|---|
| Formwerkzeug -Oberflächentemperatur | 100°C |
| minimale Formwerkzeug-Oberflächentemperatur | 80°C |
| maximale Formwerkzeug-Oberflächentemperatur | 120°C |
| Schmelztemperatur des Kunststoffs | 300°C |
| Minimaltemperatur des Schmelzbereichs | 280°C |
| Maximaltemperatur des Schmelzbereichs | 320°C |
| Absolutes Maximum der Schmelztemperatur | 360°C |
| Einspritztemperatur | 130°C |
| maximale Querspannung | 0,5 MPa |
| maximale Scherrate | 40.000 $s^{-1}$ |

Bei den Simulationen wurde ein Einspritzvorgang mittels eines Schneckenförderers mit einem Schneckendurchmesser von 50 mm simuliert. Die Menge der durch Translation der Schnecke in den jeweiligen Hohlraum eingespritzten Kunststoffschmelze wurde jeweils an das entsprechende Volumen des Hohlraums 50 bzw. 70 angepasst.

Für jeden der beiden Hohlräume 50, 70 wurde der Einspritzvorgang jeweils mit einer Einspritzgeschwindigkeit von 20, 40, 60, 80 und 100 mm/s simuliert. Die Einspritzgeschwindigkeit entspricht hier jeweils der Geschwindigkeit, mit der die Schnecke beim Einspritzvorgang translatorisch bewegt wird. Das pro Sekunde in den Hohlraum eingespritzte Volumen ergibt sich damit aus dem Produkt der Einspritzgeschwindigkeit und dem Querschnitt des Schneckenförderers (= $\pi D^2/4$ mit D = 50 mm).

Der Einspritzvorgang wurde jeweils von seinem Beginn an (d.h. wenn die Schmelzfront sich an der Einspritzöffnung 56 bzw. 76 befindet) bis zu der in den Figuren 3a-b bzw. 4a-b dargestellten Position der Schmelzfront 66, 86 (d.h. wenn die jeweilige Schmelzfront 66 bzw. 86 bereits in den Formteilbereich 52 bzw. 72 eingetreten ist) simuliert.

Mit den Simulationen wurden jeweils Innendruckprofile der Kunststoffschmelze zu dem in den Figuren 3a-b und 4a-b dargestellten Zeitpunkt, d.h. nach Eintritt der jeweiligen Schmelzfront in den Formteilbereich, ermittelt. Die Innendruckprofile für die verschiedenen Einspritzgeschwindigkeiten sind im Diagramm in Figur 5 für den Hohlraum aus Fig. 3a-b und im Diagramm in Figur 6 für den Hohlraum aus Fig. 4a-b dargestellt.

In den Diagrammen in den Figuren 5 und 6 ist der lokale Innendruck in der Kunststoffschmelze in Abhängigkeit von der Position innerhalb des Hohlraums angegeben. Die Position im Hohlraum ist auf der Abszisse dabei als Zeit in Sekunden angegeben. Der Zeitpunkt bei 0 s entspricht jeweils derjenigen Position im Hohlraum, an der der Innendruck der Kunststoffschmelze unter den in Fig. 5 und 6 mit der waagerechten Linie dargestellten kritischen Druck des vorliegend für die Kunststoffschmelze verwendeten Treibmittels Stickstoff von 33,9 bar fällt. Eine bestimmte Zeit t > 0 entspricht dann jeweils der Position eines kleinen Volumens der Kunststoffschmelze im Hohlraum, das sich vor einer Zeitspanne der Dauer t noch an der Position von t = 0 s befunden hat. Beträgt beispielsweise die Fließgeschwindigkeit dieses Volumens konstant v, so ergibt sich der räumliche Abstand s zur Position bei t = 0 entlang der Fließrichtung aus dem Produkt $s = v \cdot t$.

Die (zeitliche) Position der Schmelzfront entspricht in den Figuren 5 und 6 derjenigen Stelle, an der die jeweilige Kurve im Wesentlichen auf einen Druck von 0 bar (bzw. auf Umgebungsdruck / atmosphärischen Druck) abfällt, d.h. die Abszisse schneidet. Da der Kunststoffschmelze im Bereich der Schmelzfront im Wesentlichen kein nennenswerter Gegendruck aus dem noch unbefüllten Bereich des Hohlraum entgegenwirkt, fällt der Druck an der Schmelzfront im Wesentlichen schlagartig auf 0 bar (bzw. auf Umgebungsdruck / atmosphärischen Druck) ab.

Da die Zeitachse in den Figuren 5 und 6 so normiert ist, dass t = 0 s der Position des Unterschreitens des kritischen Drucks entspricht, kann der zeitliche Abstand zwischen einem Bereich, in dem der Innendruck der Kunststoffschmelze größer ist als der kritische Druck des Treibmittels, und der Schmelzfront (bzw. einem Abschnitt davon) direkt aus den Figuren 5 und 6 abgelesen werden; dieser zeitliche Abstand entspricht nämlich gerade der zeitlichen Position der Schmelzfront.

Gemäß der vorliegenden Erfindung darf dieser zeitliche Abstand höchstens 0,15 s, bevorzugt höchstens 0,1 s und weiter bevorzugt höchstens 0,05 s betragen. Diese Grenzen sind in den Figuren 5 und 6 durch vertikale Linien hervorgehoben. Der Bereich zwischen 0,15 s und 0,1 s kann hierbei als Übergangsbereich bezeichnet werden, da sich bei diesen zeitlichen Abständen in aller Regel die gewünschte Oberflächenstrukturierung in Eisoptik einstellt, zum Teil

jedoch noch nicht gleichmäßig über das gesamte Formteil. Bei zeitlichen Abständen unterhalb von 0,1 s und erst recht unterhalb von 0,05 s konnte die gewünschte Oberflächenstrukturierung in Eisoptik vollflächig erreicht werden.

Aus den Figuren 5 und 6 lassen sich nun die Einspritzgeschwindigkeiten ablesen, bei denen die oben genannte Bedingung erfüllt wird.

Für das plattenförmige Bauteil ergibt sich aus Figur 5, dass eine Einspritzgeschwindigkeit von 20 mm/s zu gering ist, da der zeitliche Abstand zwischen dem kritischen Innendruckbereich und der Schmelzfront hier fast 30 s beträgt. Der Wert bei 40 mm/s liegt im Übergangsbereich und mit Einspritzgeschwindigkeiten von 60, 80 oder 100 mm/s wird das geforderte Kriterium so erfüllt, dass mit diesen Werten für die Einspritzgeschwindigkeit die gewünschte Oberflächenstrukturierung in Eisoptik zuverlässig und im Wesentlichen vollflächig erreicht werden kann.

Für das schüsselförmige Bauteil ergibt sich aus Figur 6, dass bei einer Einspritzgeschwindigkeiten von 20 mm/s der Übergangsbereich erreicht wird, während bei Einspritzgeschwindigkeiten von mindestens 40 mm/s das geforderte Kriterium so erfüllt wird, dass mit diesen Werten für die Einspritzgeschwindigkeit die gewünschte Oberflächenstrukturierung in Eisoptik zuverlässig und im Wesentlichen vollflächig erreicht werden kann.

Neben der Simulation der zuvor beschriebenen Einspritzvorgänge wurden diese auch tatsächlich durchgeführt.

Hierzu wurden zwei den Figuren 3a-b und 4a-b entsprechende Formwerkzeuge verwendet, die an einen Schneckenförderer vom Typ ARBURB Allrounder 570C, erhältlich von der ARBURG GmbH & CoKG, Lossburg, Deutschland, mit einem Schneckendurchmesser von 50 mm angeschlossen wurden.

Polycarbonatgranulat vom Typ Markrolon AL2647, erhältlich von Bayer Material Science AG, Leverkusen, Deutschland, wurde in den Schneckenförderer gefüllt und dort unter Bildung einer Kunststoffschmelze auf eine Temperatur von 300 °C erhitzt. Mit der Schnecke des Schneckenförderers wurde dann in dem die Schnecke umgebenden Hohlzylinder jeweils ein Volumen vor das dem Formwerkzeug zugewandte Ende der Schnecke transportiert, das an das Volumen des jeweiligen Formwerkzeug-Hohlraums angepasst war.

Beim Einspritzvorgang wurde die Schnecke dann jeweils mit der entsprechenden Einspritzgeschwindigkeit translatorisch nach vorne, d.h. in Richtung des Formwerkzeugs bewegt, so dass die Kunststoffschmelze aus dem Schneckenförderer durch die Einspritzöffnung 56 bzw. 76 in den Hohlraum des entsprechenden Formwerkzeugs 50 bzw. 70 gespritzt wurde. Kurz vor dem Einspritzen in die jeweilige Einspritzöffnung wurde die Kunststoffschmelze zudem mit 0,60 Gew.-% Stickstoff beladen, um die Kunststoffschmelze im Hohlraum aufzuschäumen.

An den auf die zuvor beschriebene Weise hergestellten, plattenförmigen Formteilen zeigte sind, dass die gewünschte Oberflächenstrukturierung in Eisoptik bei Einspritzgeschwindigkeiten von 20 mm/s nicht, bei Einspritzgeschwindigkeiten von 40 mm/s teilflächig und bei Einspritzgeschwindigkeiten von 60 mm/s und mehr vollflächig erreicht wurde.

An den auf die zuvor beschriebene Weise hergestellten, schüsselförmigen Formteilen zeigte sind, dass die gewünschte Oberflächenstrukturierung in Eisoptik bei Einspritzgeschwindigkeiten von 20 mm/s teilflächig und bei Einspritzgeschwindigkeiten von 40 mm/s und mehr vollflächig erreicht wurde.

Insgesamt zeigte sich in den Versuchen, dass die gewünschten Oberflächenstrukturierung in Eisoptik für diejenigen Einspritzgeschwindigkeiten erreicht wurden, bei denen das zuvor genannte Kriterium für das Innendruckprofil der Kunststoffschmelze erfüllt wurde.

Figur 7a zeigt die Oberfläche des mit einer Einspritzgeschwindigkeit von 60 mm/s hergestellten plattenförmigen Formteils (erfindungsgemäß). Figur 7b zeigt zum Vergleich die Oberfläche des mit einer Einspritzgeschwindigkeit von 20 mm/s hergestellten plattenförmigen Formteils (nicht erfindungsgemäß).

Während die Oberfläche des nicht erfindungsgemäß hergestellten Formteils in Figur 7b eine regelmäßige, streifige, laminare Oberflächenstruktur zeigt, ergibt sich für das erfindungsgemäß hergestellte Formteil in Figur 7a die gewünschte turbulente Oberflächenstrukturierung, die an das Erscheinungsbild von Eis erinnert.

Eine objektiven Unterscheidung von erfindungsgemäßen (z.B. Figur 7a) und nicht-erfindungsgemäßen Oberflächenstrukturen (z.B. Figur 7b) ist durch die Bestimmung der gemittelten Verhältnisse der Glanzgrade gemessen in Fließrichtung zu den Glanzgraden quer zur Fließrichtung anhand des zuvor beschriebenen Messverfahrens möglich.

An einer Reihe erfindungsgemäß hergestellter Formteile und an einer Reihe von Vergleichsbauteilen, insbesondere auch an den Formteilen aus den Figuren 5 und 6, wurden die Glanzgradverhältnisse entsprechend der zuvor beschriebenen Messmethode mittels eines Glanzgradmessgeräts vom Typ haze-gloss AG-4601, erhältlich von der Firma BYK-Gardner GmbH, Geretsried, Deutschland, bestimmt.

Tabelle 6 zeigt die Ergebnisse der Glanzgradmessungen parallel und quer zur Fließrichtung an jeweils sechs Messpunkten für drei erfindungsgemäß hergestellte Formteile (A-C) und drei nicht-erfindungsgemäß hergestellte Vergleichs-Formteile (D-F). Die erfindungsgemäß hergestellten Formteile wiesen dabei eine turbulente Oberflächenstrukturierung vergleichbar der in Figur 7a dargestellten Oberflächenstrukturierung auf, während die nicht-erfindungsgemäß hergestellten Formteile jeweils eine streifige, laminare Oberflächenstrukturierung vergleichbar mit der in Figur 7b dargestellten Oberflächenstrukturierung aufwiesen.

Die Einheiten der Glanzgradmessungen in Tabelle 7 entsprechen den vom o.g. Gerät verwendeten Glanzgrad-Einheiten. Sie sind vorliegend nicht angegeben, da es letztlich nur auf das Verhältnis der Glanzgrade ankommt.

Tabelle 6: Ergebnisse der Glanzgradmessungen

| Messpunkt | Richtung | A | B | C | D | E | F |
|---|---|---|---|---|---|---|---|
| 1 | quer | 11 | 7 | 8 | 13 | 13 | 13 |
| 2 | quer | 13 | 8 | 5 | 15 | 13 | 13 |
| 3 | quer | 7 | 8 | 6 | 13 | 14 | 15 |
| 4 | quer | 7 | 8 | 7 | 14 | 14 | 15 |
| 5 | quer | 11 | 11 | 12 | 19 | 12 | 11 |
| 6 | quer | 13 | 13 | 9 | 19 | 14 | 10 |
| 1 | parallel | 10 | 8 | 9 | 34 | 30 | 34 |
| 2 | parallel | 22 | 7 | 5 | 29 | 29 | 33 |
| 3 | parallel | 9 | 9 | 8 | 37 | 37 | 51 |
| 4 | parallel | 7 | 16 | 7 | 34 | 34 | 28 |
| 5 | parallel | 18 | 13 | 14 | 31 | 27 | 20 |
| 6 | parallel | 24 | 16 | 9 | 31 | 30 | 21 |

Mit den Ergebnissen aus Tabelle 6 ergeben sich die in Tabelle 7 aufgeführten Glanzgradverhältnisse der Glanzgrade parallel zur Fließrichtung zu den Glanzgraden quer zur Fließrichtung.

Tabelle 7: Glanzgradverhältnisse und gemitteltes Glanzgradverhältnis

| Messpunkt | A | B | C | D | E | F |
|---|---|---|---|---|---|---|
| 1 | 0,9 | 1,1 | 1,1 | 2,6 | 2,3 | 2,6 |
| 2 | 1,7 | 0,9 | 1,0 | 1,9 | 2,2 | 2,5 |
| 3 | 1,3 | 1,1 | 1,3 | 2,8 | 2,6 | 3,4 |
| 4 | 1,0 | 2,0 | 1,0 | 2,4 | 2,4 | 2,5 |
| 5 | 1,6 | 1,2 | 1,2 | 1,6 | 2,3 | 1,8 |
| 6 | 1,8 | 1,2 | 1,0 | 1,6 | 2,1 | 2,1 |
| Mittelwert | 1,5 | 1,3 | 1,1 | 2,1 | 2,3 | 2,6 |

Für die objektive Unterscheidung der erfindungsgemäßen von der nicht-erfindungsgemäßen Oberflächenstruktur ist das über die einzelnen Messpunkte gemittelte Glanzgradverhältnis entscheidend. Dieses ist in der letzten Zeile der Tabelle 7 angegeben.

Aus Tabelle 7 ist ersichtlich, dass die erfindungsgemäß hergestellten Formteile A - C ein gemitteltes Glanzgradverhältnis von weniger als 1,9, insbesondere weniger als 1,5 und teilweise sogar von weniger als 1,2 aufweisen, während die gemittelten Glanzgradverhältnisse der nicht-erfindungsgemäß hergestellten Formteile D - F größer als 2, vorliegend sogar größer als 2,1 sind.

Damit ermöglicht das Kriterium über die gemittelten Glanzgradverhältnisse eine objektive Unterscheidung zwischen erfindungsgemäßen und nicht-erfindungsgemäßen Formteilen.

**Patentansprüche**

**1.** Verfahren zur Herstellung eines Formteils (50) im Schaumspritzguss,

- bei dem durch Schmelzen eines thermoplastischen Kunststoffs eine Kunststoffschmelze (18) bereitgestellt wird,
- bei dem die Kunststoffschmelze (18) mit einem Treibmittel (22) beladen wird und

- bei dem die mit dem Treibmittel (22) beladene Kunststoffschmelze (18) unter Druck in einen Hohlraum (26) eines Formwerkzeugs (28) eingespritzt wird, so dass die Kunststoffschmelze (18) den Hohlraum (26) hinter einer durch den Hohlraum (26) laufenden Schmelzfront (34) ausfüllt,
wobei
- die Einspritzgeschwindigkeit, mit der die Kunststoffschmelze (18) in den Hohlraum (26) des Formwerkzeugs (28) gespritzt wird, so eingestellt wird, dass der Innendruck der Kunststoffschmelze (18) im Hohlraum (26) in einem Bereich (40), der einem Abschnitt der Schmelzfront (34) mit einem zeitlichem Abstand von höchstens 0,15 s nachfolgt, zumindest zu einem Zeitpunkt während des Spritzvorgangs größer ist als der kritische Druck des Treibmittels (22),
- **dadurch gekennzeichnet, dass**
die Kunststoffschmelze (18) im Hohlraum (26) zusätzlich zum Bereich (40) einen weiteren Bereich aufweist, wobei in diesem weiteren Bereich der Innendruck der Kunststoffschmelze (18) den kritischen Druck des Treibmittels unterschreitet,
- wobei dieser weitere Bereich in Fließrichtung der Kunststoffschmelze (18) vorne von der Schmelzfront (34) und in Fließrichtung der Kunststoffschmelze hinten vom Bereich (40) begrenzt wird, und
- wobei die mit dem Treibmittel (22) beladene Kunststoffschmelze (18) während des Einspritzvorgangs aufschäumt.

2. Verfahren nach Anspruch 1, **dadurch gekennzeichnet, dass** der Bereich (40), in dem der Innendruck der Kunststoffschmelze (18) zumindest zu einem Zeitpunkt während des Spritzvorgangs größer ist als der kritische Druck des Treibmittels (22), dem Abschnitt der Schmelzfront (34) mit einem zeitlichen Abstand von höchsten 0,1 s, insbesondere von höchstens 0,05 s nachfolgt.

3. Verfahren nach Anspruch 1 oder 2, **dadurch gekennzeichnet, dass** der thermoplastische Kunststoff ein transparenter Kunststoff ist, insbesondere ein transparenter Kunststoff, der aus folgender Gruppe ausgewählt ist oder zumindest einen Kunststoff dieser Gruppe umfasst: Polycarbonate (PC), Polystyrole (PS), Polymethylmethacrylate (PMMA), Styrol-Acrylnitrile (SAN), Cyclo-Olefin-Copolymere (COC), transparente Polyamide (PA), transparente Polyester wie beispielsweise A-PET (amorphes PET, PET mit 5% Cyclohexanedimethanol oder Neopentyl glycol), PEN (Polyethylen naththalat), PTT (Polytrimethylenterephthalat), PETG (Terephthalsäure; Ethylenglycol / Cyclohexanedimetanol), Polyester aus Terephthalsäure mit Cyclohexanedimetanol und Tetramethyl-cyclobutanediol oder Mischungen aus diesen Polymeren.

4. Verfahren nach einem der Ansprüche 1 bis 3, **dadurch gekennzeichnet, dass** der thermoplastische Kunststoff aus folgender Gruppe ausgewählt ist oder zumindest einen Kunststoff dieser Gruppe umfasst: Polycarbonate (PC), Polystyrole (PS), Polymethylmethacrylate (PMMA), Cyclo-Olefin-Copolymere (COC), Styrol-Acrylnitril (SAN), transparente Polyamide (PA), Polyvinylchloride (PVC), Polyphenylenether (PPE) oder eine Mischung davon.

5. Verfahren nach einem der Ansprüche 1 bis 4,**dadurch gekennzeichnet, dass** die Kunststoffschmelze (18) durch Einleiten eines Gases, insbesondere von Stickstoff oder Kohlendioxid, in die Kunststoffschmelze mit einem Treibmittel (22) beladen wird.

6. Verfahren nach einem der Ansprüche 1 bis 5, **dadurch gekennzeichnet, dass** die Konzentration des Treibmittels (22) in der mit Treibmittel beladenen Kunststoffschmelze (18) vor dem Einspritzen in den Hohlraum (26) für chemische Treibmittel 0,5 bis 3 Gew.-% und für physikalische Treibmittel 0,2 bis 1,0 Gew.-%.

7. Verfahren nach einem der Ansprüche 1 bis 6, **dadurch gekennzeichnet, dass** das Formwerkzeug (28) so ausgebildet ist, dass der Hohlraum in Fließrichtung der Kunststoffschmelze Querschnittsverjüngungen von höchstens 10%, vorzugsweise keine Querschnittsverjüngungen aufweist.

8. Verfahren nach einem der Ansprüche 1 bis 7,**dadurch gekennzeichnet, dass** das Formwerkzeug (28) für einen Filmanguss oder für einen Direktanguss ausgebildet ist.

9. Im Schaumspritzguss hergestelltes Formteil (50) aus einem aufgeschäumten thermoplastischen Kunststoff, **dadurch gekennzeichnet,**
**dass** das Formteil (50) einen Oberflächenbereich mit einer durch den aufgeschäumten thermoplastischen Kunststoff gebildeten optischen Strukturierung aufweist, deren gemitteltes Verhältnis der Glanzgrade gemessen in Fließrichtung zu den Glanzgraden gemessen quer zur Fließrichtung unter 1,9 liegt,
wobei unter dem gemittelten Verhältnis der Glanzgrade gemessen in Fließrichtung zu den Glanzgraden quer zur

Fließrichtung eines Formteils der Parameter verstanden wird, der mit dem anhand der nachfolgenden Messregeln beschriebenen Messverfahren bestimmt wird:

(a) Einsatz eines optischen Messgeräte, das nach DIN 67530 misst,
(b) Messung der Glanzgrade nach DIN 67530 mit einem Ein- und Ausfallwinkel von 60,
(c) Vermessung des zu untersuchenden Oberflächenbereichs des Formteils an sechs verschiedenen Messstellen,
(d) Bestimmung der Anordnung der Messstellen ausgehend von der Position des Angusses beim Spritzgießen,
(e) Auswahl der maximalen Fließweglänge als Maß für die Bestimmung der Messbereiche, wobei die maximale Fließweglänge die Distanz zwischen dem Angusspunkt des Formteils und dem hiervon am weitesten entfernten Punkt, dem Fließendpunkt, ist, und wobei für den Fall, dass das untersuchte Formteil mehrere Angusspunkte aufweist, die Bindenaht der Fließfronten von verschiedenen Angusspunkten als Fließendpunkt verwendet werden kann,
(f) Durchführung der in den Punkten (g) bis (i) beschriebene Messung je Angusspunkt,
(g) Auswahl der Messbereiche wie folgt
zwei Messpunkte im Bereich 10 - 25 %, zwei Messpunkte im Bereich 40 - 60 % und zwei Messpunkte im Bereich 75 - 90 % der maximalen Fließweglänge,
(h) wobei im jeweiligen Messbereich die einzelnen Messpunkte mindestens 25% der vorliegenden Fließwegbreite voneinander entfernt sein müssen,
(i) wobei je Messpunkt mit dem Messgerät jeweils drei Glanzgradmessungen in Fließrichtung und quer zur Fließrichtung durchgeführt werden müssen, und wobei die Glanzgradmessungen jeweils auf einer Messfläche von mindestens 7 x 7 mm erfolgen,
(j) wobei für jede Messung i die Glanzgrade in Fließrichtung GiFR,i zu den Glanzgraden quer zur Fließrichtung GqFR,i ins Verhältnis gesetzt werden: VG,i = GiFR,i / G qFR,i,
(k) wobei anschließend der Mittelwert aus allen zuvor ermittelten Glanzgradverhältnissen anhand der Formel

$$\overline{V}_G = \frac{1}{n}\sum_{i=1}^{n} V_{G,i}$$

gebildet wird, wobei $\overline{V}_G$ das gemittelte Verhältnis der Glanzgrade gemessen in Fließrichtung zu den Glanzgraden quer zur Fließrichtung ist,
und wobei das Formteil mit einem Verfahren nach einem der Ansprüche 1 bis 8 herstellbar ist.

**10.** Formteil nach einem der Anspruch 9, **dadurch gekennzeichnet, dass** das Formteil (50) einen Oberflächenbereich mit einer durch den aufgeschäumten thermoplastischen Kunststoff gebildeten optischen Strukturierung aufweist, deren gemitteltes Verhältnis der Glanzgrade gemessen in Fließrichtung zu den Glanzgraden gemessen quer zur Fließrichtung unter 1,5 liegt.

**11.** Formteil nach einem der Ansprüche 9 oder 10, **dadurch gekennzeichnet, dass** das Formteil (50) einen Oberflächenbereich mit einer durch den aufgeschäumten thermoplastischen Kunststoff gebildeten optischen Strukturierung aufweist, deren gemitteltes Verhältnis der Glanzgrade gemessen in Fließrichtung zu den Glanzgraden gemessen quer zur Fließrichtung unter 1,2 liegt.

**12.** Formteil nach einem der Ansprüche 9 bis 11, **dadurch gekennzeichnet, dass** der thermoplastische Kunststoff ein transparenter Kunststoff ist.

**13.** Formteil nach einem der Ansprüche 9 bis 12,**dadurch gekennzeichnet, dass** der thermoplastische Kunststoff aus folgender Gruppe ausgewählt ist oder zumindest ein Element dieser Gruppe umfasst: Polycarbonate (PC), Polystyrole (PS), Polymethylmethacrylate (PMMA), Styrol-Acrylnitril (SAN), transparente Polyamide (PA), Polyvinylchloride (PVC), Polyphenylenether (PPE) oder eine Mischung davon.

**14.** Formteil nach einem der Ansprüche 9 bis 13, **dadurch gekennzeichnet, dass** der Oberflächenbereich mit der durch den aufgeschäumten thermoplastischen Kunststoff gebildeten optischen Strukturierung mindestens 30 %, vorzugsweise mindestens 50 %, insbesondere mindestens 70 % der Gesamtoberfläche des Formteils umfasst.

**15.** Formteil nach einem der Ansprüche 9 bis 14, **dadurch gekennzeichnet, dass** das Formteil eine Dicke im Bereich von 1 und 20 mm, bevorzugt von 2 bis 12 mm, insbesondere von 2 und 8 mm, aufweist.

**16.** Verwendung eines Formteils nach einem der Ansprüche 9 bis 15 als Bauteile für Möbelstücke oder Beleuchtungselemente, Produktcasings, insbesondere Handycover, als Becher, Schalen und Abdeckungen, Kühlboxen bzw. Verkleidungsteile für Kühlboxen, als Mehrwegbehälter für Kälte- und Frischeprodukte, insbesondere für den Logistikbereich.

## Claims

1. Process for the production of a molding (50) by structural foam molding,

   - in which a plastics melt (18) is provided by melting of a thermoplastic,
   - in which the plastics melt (18) is loaded with a blowing agent (22), and
   - in which the plastics melt (18) loaded with the blowing agent (22) is injected under pressure into a cavity (26) of a mold (28) in such a way that the plastics melt (18) fills the cavity (26) behind a melt front (34) proceeding through the cavity (26),

   **where**

   - the injection velocity at which the plastics melt (18) is injected into the cavity (26) of the mold (28) is adjusted in such a way that, in a region (40) that follows a section of the melt front (34) with a chronological separation of at most 0.15 s, at least at one juncture during the injection procedure, the internal pressure of the plastics melt (18) in the cavity (26) is greater than the critical pressure of the blowing agent (22),

     • **characterized in that**
     the plastics melt (18) in the cavity (26) comprises, in addition to the region (40), a further region where, in this further region, the internal pressure of the plastics melt (18) is lower than the critical pressure of the blowing agent,

       • where this further region is delimited frontally in the direction of flow of the plastics melt (18) by the melt front (34) and retrally in the direction of flow of the plastics melt by the region (40), and
       • where the plastics melt (18) loaded with the blowing agent (22) foams during the injection procedure .

2. Process according to Claim 1, **characterized in that** the region (40) in which the internal pressure of the plastics melt (18) is, at least at one juncture during the injection procedure, greater than the critical pressure of the blowing agent (22) follows the section of the melt front (34) with a chronological separation of at most 0.1 s, in particular of at most 0.05 s.

3. Process according to Claim 1 or 2, **characterized in that** the thermoplastic is a transparent plastic, in particular a transparent plastic selected from the following group or comprising at least one plastic from this group: polycarbonates (PC), polystyrenes (PS), polymethyl methacrylates (PMMA), styrene-acrylonitriles (SAN), cycloolefin copolymers (COC), transparent polyamides (PA), transparent polyesters, for example A-PET (amorphous PET, PET with 5% of cyclohexanedimethanol or neopentyl glycol), PEN (polyethylene naphthalate), PTT (polytrimethylene terephthalate), PETG (terephthalic acid; ethylene glycol / cyclohexanedimethanol), polyester made of terephthalic acid with cyclohexanedimethanol and tetramethylcyclobutanediol, and mixtures of these polymers.

4. Process according to any of Claims 1 to 3, **characterized in that** the thermoplastic is selected from the following group or at least comprises a plastic from this group: polycarbonates (PC), polystyrenes (PS), polymethyl methacrylates (PMMA), cycloolefin copolymers (COC), styrene-acrylonitrile (SAN), transparent polyamides (PA), polyvinyl chlorides (PVC), polyphenylene ethers (PPE), and mixtures thereof.

5. Process according to any of Claims 1 to 4, **characterized in that** the plastics melt (18) is loaded with a blowing agent (22) via introduction of a gas, in particular of nitrogen or carbon dioxide, into the plastics melt.

6. Process according to any of Claims 1 to 5, **characterized in that** the concentration of the blowing agent (22) in the blowing-agent-loaded plastics melt (18) before injection into the cavity (26) is from 0.5 to 3% by weight for chemical blowing agents and from 0.2 to 1.0% by weight for physical blowing agents.

7. Process according to any of Claims 1 to 6, **characterized in that** the design of the mold (28) is such that, in the direction of flow of the plastics melt, the cross section of the cavity does not narrow by more than 10%, and preferably does not narrow at all.

**8.** Process according to any of Claims 1 to 7, **characterized in that** the mold (28) has been designed for a film gate or for a direct gate.

**9.** Molding (50) produced by structural foam molding and made of a foamed thermoplastic, **characterized in that** the molding (50) has a surface region with optical structuring which is formed by the foamed thermoplastic and for which the averaged ratio of the gloss levels measured in the direction of flow to the gloss levels measured perpendicularly to the direction of flow is below 1.9,
where the expression "the averaged ratio of the gloss levels measured in the direction of flow to the gloss levels perpendicularly to the direction of flow of a molding" means the parameter determined by the measurement method described on the basis of the following rules of measurement:

a) use of optical measurement equipment that measures in accordance with DIN 67530 ,
b) measurement of the gloss levels in accordance with DIN 67530 with an angle of incidence and an angle of reflection of 60°,
c) measurement, at six different measurement sites of the molding surface region to be studied,
d) determination of the arrangement of the measurement sites by starting from the position of the gate during injection molding,
e) selection of the maximal flow path length as measure for the determination of the measurement regions, where the maximal flow path length is the distance between the gate mark of the molding and the point at the furthest distance therefrom, the flow end point, and where, if the molding studied has a plurality of gate marks, the weld line of the flow fronts from different gate marks can be used as flow end points,
f) implementation of the measurement procedure described in the points (g) to (i) for each gate mark,
g) selection of the measurement regions as follows, two measurement points in the range from 10 to 25% of the maximal flow path length, two measurement points in the range from 40 to 60% and two measurement points in the range from 75 to 90%,
h) where the distance between the individual measurement points in each measurement range must be at least 25% of the prevailing flow path with,
i) where for each measurement point the measurement equipment must respectively make three gloss level measurements in the direction of flow and perpendicularly to the direction of flow, and where the measurement area used for each of the gloss level measurements is at least 7 × 7 mm,
j) where, for each measurement i, the ratio of the gloss levels in the direction of flow GiFR,i to the gloss levels perpendicularly to the direction of flow GqFR,i is calculated : VG,i = GiFR,i/GqFR,i,
k) where the average value of all of the gloss level ratios previously determined is then calculated on the basis of the formula $\overline{V}_G = \frac{1}{n}\sum_{i=1}^{n} V_{G,i}$ , where $\overline{V}_G$ is the averaged ratio of the gloss levels measured in the direction of flow to the gloss levels perpendicularly to the direction of flow,
and where the molding can be produced by a process according to any of Claims 1 to 8.

**10.** Molding according to any of Claim 9, **characterized in that** the molding (50) has a surface region with optical structuring which is formed by the foamed thermoplastic and for which the averaged ratio of the gloss levels measured in the direction of flow to the gloss levels measured perpendicularly to the direction of flow is below 1.5.

**11.** Molding according to either of Claims 9 and 10, **characterized in that** the molding (50) has a surface region with optical structuring which is formed by the foamed thermoplastic and for which the averaged ratio of the gloss levels measured in the direction of flow to the gloss levels measured perpendicularly to the direction of flow is below 1.2.

**12.** Molding according to any of Claims 9 to 11, **characterized in that** the thermoplastic is a transparent plastic.

**13.** Molding according to any of Claims 9 to 12,
**characterized in that**
the thermoplastic is selected from the following group or at least comprises an element from this group: polycarbonates (PC), polystyrenes (PS), polymethyl methacrylates (PMMA), styrene-acrylonitrile (SAN), transparent polyamides (PA), polyvinyl chlorides (PVC), polyphenylene ethers (PPE), and mixtures thereof.

**14.** Molding according to any of Claims 9 to 13, **characterized in that** the surface region with the optical structuring which is formed via the foamed thermoplastic comprises at least 30%, preferably at least 50%, in particular at least

70%, of the entire surface of the molding.

**15.** The molding according to any of Claims 9 to 14, **characterized in that** the thickness of the molding is in the range from 1 and 20 mm, preferably from 2 to 12 mm, in particular from 2 and 8 mm.

**16.** Use of a molding according to any of Claims 9 to 15 as component for items of furniture or lighting elements, product casings, in particular cellphone covers, or as cups, bowls, and protective covers, coolboxes or cladding parts for coolboxes, or as multiple-use containers for refrigerated and fresh products, in particular for the logistics sector.

## Revendications

**1.** Procédé pour la fabrication d'une pièce moulée (50) par moulage par injection de mousse,

- dans lequel une masse fondue de matériau synthétique (18) est préparée par fusion d'un matériau synthétique thermoplastique,
- dans lequel la masse fondue de matériau synthétique (18) est chargée d'un agent gonflant (22) et
- dans lequel la masse fondue de matériau synthétique (18) chargée de l'agent gonflant (22) est injectée sous pression dans une cavité (26) d'un outil de moulage (28) de manière telle que la masse fondue de matériau synthétique (18) remplit la cavité (26) derrière un front de fusion (34) passant à travers la cavité (26),
- la vitesse d'injection, à laquelle la masse fondue de matériau synthétique (18) est injectée dans la cavité (26) de l'outil de moulage (28), étant réglée de manière telle que la pression interne de la masse fondue de matériau synthétique (18) dans la cavité (26) dans une zone (40) qui suit une section du front de fusion (34) d'un intervalle temporel d'au plus 0,15 seconde, est supérieure à la pression critique de l'agent gonflant (22) au moins à un instant pendant le processus d'injection,
- **caractérisé**

**en ce que** la masse fondue de matériau synthétique (18) dans la cavité (26) présente, en plus de la zone (40), une autre zone, la pression interne de la masse fondue de matériau synthétique (18) dans cette autre zone passant sous la pression critique de l'agent gonflant,
- cette autre zone étant limitée, dans le sens d'écoulement de la masse fondue de matériau synthétique (18), à l'avant, par le front de fusion (34) et dans le sens d'écoulement de la masse fondue de matériau synthétique, à l'arrière, par la zone (40) et
- la masse fondue de matériau synthétique (18) chargée de l'agent gonflant (22) moussant pendant le processus d'injection.

**2.** Procédé selon la revendication 1, **caractérisé en ce que** la zone (40), dans laquelle la pression interne de la masse fondue de matériau synthétique (18) est supérieure à la pression critique de l'agent gonflant (22) au moins à un instant pendant le processus d'injection, suit la section du front de fusion (34) d'un intervalle temporel d'au plus 0,1 seconde, en particulier d'au plus 0,05 seconde.

**3.** Procédé selon la revendication 1 ou 2, **caractérisé en ce que** le matériau synthétique thermoplastique est un matériau synthétique transparent, en particulier un matériau synthétique transparent qui est choisi dans le groupe suivant ou qui comprend au moins un matériau synthétique de ce groupe : polycarbonates (PC), polystyrènes (PS), poly(méthacrylates de méthyle) (PMMA), styrène-acrylonitriles (SAN), copolymères cyclooléfiniques (COC), polyamides transparents (PA), polyesters transparents tels que par exemple A-PET (PET amorphe, PET comprenant 5% de cyclohexanediméthanol ou de néopentylglycol), PEN (poly(naphtalate d'éthylène)), PTT (poly(téréphtalate de triméthylène)), PETG (acide téréphtalique ; éthylèneglycol/cyclohexanediméthanol), polyester de l'acide téréphtalique et de cyclohexanediméthanol et de tétraméthylcyclobutanediol ou les mélanges de ces polymères.

**4.** Procédé selon l'une quelconque des revendications 1 à 3, **caractérisé en ce que** le matériau synthétique thermoplastique est choisi dans le groupe suivant ou comprend au moins un matériau synthétique de ce groupe : polycarbonates (PC), polystyrènes (PS), poly(méthacrylates de méthyle) (PMMA), copolymères cyclooléfiniques (COC), styrène-acrylonitrile (SAN), polyamides transparents (PA), poly(chlorures de vinyle) (PVC), polyphénylénéther (PPE) ou un mélange de ceux-ci.

**5.** Procédé selon l'une quelconque des revendications 1 à 4, **caractérisé en ce que** la masse fondue de matériau synthétique (18) est chargée en agent gonflant (22) par introduction d'un gaz, en particulier d'azote ou de dioxyde de carbone, dans la masse fondue de matériau synthétique.

**6.** Procédé selon l'une quelconque des revendications 1 à 5, **caractérisé en ce que** la concentration en agent gonflant (22) dans la masse fondue de matériau synthétique (18) chargée d'agent gonflant avant l'injection dans la cavité (26) est de 0,5 à 3% en poids pour les agents gonflants chimiques et de 0,2 à 1,0% en poids pour les agents gonflants physiques.

**7.** Procédé selon l'une quelconque des revendications 1 à 6, **caractérisé en ce que** l'outil de moulage (28) est conçu de manière telle que, dans le sens d'écoulement de la masse fondue de matériau synthétique, la cavité présente des rétrécissements de section transversale d'au plus 10% et ne présente de préférence pas de rétrécissements de section transversale.

**8.** Procédé selon l'une quelconque des revendications 1 à 7, **caractérisé en ce que** l'outil de moulage (28) est conçu pour une injection en film ou pour une injection directe.

**9.** Pièce moulée (50) fabriquée par moulage par injection de mousse à partir d'un matériau synthétique thermoplastique moussé, **caractérisé en ce que** la pièce moulée (50) présente une zone superficielle pourvue d'une structuration optique formée par le matériau synthétique thermoplastique moussé, dont le rapport moyen des degrés de brillance mesurés dans le sens d'écoulement aux degrés de brillance mesurés transversalement au sens d'écoulement est inférieur à 1, 9,
le rapport moyen des degrés de brillance mesurés dans le sens d'écoulement aux degrés de brillance mesurés transversalement au sens d'écoulement d'une pièce moulée correspondant au paramètre qui est déterminé par le procédé de mesure décrit à l'aide des règles de mesure suivantes :

(a) utilisation d'un instrument de mesure optique qui mesure selon la norme DIN 67530,
(b) mesure des degrés de brillance selon la norme DIN 67530 à un angle d'incidence et un angle de réflexion de 60,
(c) mesurage de la zone superficielle à étudier de la pièce moulée en six sites de mesures différents,
(d) détermination de la disposition des sites de mesures partant de la position de la carotte lors du moulage par injection,
(e) sélection de la longueur maximale du trajet d'écoulement comme mesure pour la détermination des zones de mesure, la longueur maximale du trajet d'écoulement étant la distance entre le point d'injection de la pièce moulée et le point le plus éloigné de celui-ci, qui est le point final d'écoulement et, pour le cas où la pièce moulée étudiée présenterait plusieurs points d'injection, la ligne de soudure des fronts d'écoulement de différents points d'injection pouvant être utilisée comme point de fin d'écoulement,
(f) réalisation de la mesure décrite aux points (g) à (i) pour chaque point d'injection,
(g) sélection des zones de mesure comme suit deux points de mesure dans la zone de 10-25%, deux points de mesure dans la zone de 40-60% et deux points de mesure dans la zone 75-90% de la longueur maximale du trajet d'écoulement,
(h) les différents points de mesure dans chaque zone de mesure devant être éloignés l'un de l'autre d'au moins 25% de la largeur respective du trajet d'écoulement,
(i) trois mesures de degré de brillance dans le sens d'écoulement et transversalement au sens d'écoulement devant à chaque fois être réalisées par point de mesure par l'instrument de mesure et les mesures des degrés de brillance étant effectuées à chaque fois sur une surface de mesure d'au moins 7 x 7 mm,
(j) pour chaque mesure i, un rapport étant formé entre les degrés de brillance dans le sens d'écoulement GiFR,i et les degrés de brillance transversaux au sens d'écoulement GqFR,i : VG,i = GiFR,i/GqFR,i,
(k) la valeur moyenne étant ensuite formée à partir de tous les rapports de degrés de brillance précédemment déterminés à l'aide de la formule $\overline{V}_G = \frac{1}{n}\sum_{i=1}^{n} V_{G,i}$ $\overline{V}_G$ étant le rapport moyen des degrés de brillance mesurés dans le sens d'écoulement aux degrés de brillance mesurés transversalement au sens d'écoulement,
et la pièce moulée pouvant être fabriquée à l'aide d'un procédé selon l'une quelconque des revendications 1 à 8.

**10.** Pièce moulée selon la revendication 9, **caractérisée en ce que** la pièce moulée (50) présente une zone superficielle pourvue d'une structuration optique formée par le matériau synthétique thermoplastique moussé, dont le rapport moyen des degrés de brillance mesurés dans le sens d'écoulement aux degrés de brillance mesurés transversalement au sens d'écoulement est inférieur à 1,5.

**11.** Pièce moulée selon l'une quelconque des revendications 9 ou 10, **caractérisée en ce que** la pièce moulée (50)

présente une zone superficielle pourvue d'une structuration optique formée par le matériau synthétique thermoplastique moussé, dont le rapport moyen des degrés de brillance mesurés dans le sens d'écoulement aux degrés de brillance mesurés transversalement au sens d'écoulement est inférieur à 1,2.

**12.** Pièce moulée selon l'une quelconque des revendications 9 à 11, **caractérisée en ce que** le matériau synthétique thermoplastique est un matériau synthétique transparent.

**13.** Pièce moulée selon l'une quelconque des revendications 9 à 12, **caractérisée en ce que** le matériau synthétique thermoplastique est choisi dans le groupe suivant ou comprend au moins un élément de ce groupe : polycarbonates (PC), polystyrènes (PS), poly(méthacrylates de méthyle) (PMMA), styrène-acrylonitrile (SAN), polyamides transparents (PA), poly(chlorures de vinyle) (PVC), polyphénylénéther (PPE) ou un mélange de ceux-ci.

**14.** Pièce moulée selon l'une quelconque des revendications 9 à 13, **caractérisée en ce que** la zone superficielle présentant la structuration optique formée par le matériau synthétique thermoplastique moussé représente au moins 30%, de préférence au moins 50%, en particulier au moins 70% de la surface totale de la pièce moulée.

**15.** Pièce moulée selon l'une quelconque des revendications 9 à 14, **caractérisée en ce que** la pièce moulée présente une épaisseur dans la plage de 1 à 20 mm, de préférence de 2 à 12 mm, en particulier de 2 à 8 mm.

**16.** Utilisation d'une pièce moulée selon l'une quelconque des revendications 9 à 15 comme éléments pour des parties de meuble ou des éléments d'éclairage, des boîtiers pour des produits, en particulier des protections de portables, comme récipients, bols et couvercles, glacières ou éléments de garniture pour glacières, comme récipients réutilisables pour des produits froids et frais, en particulier pour le domaine logistique.

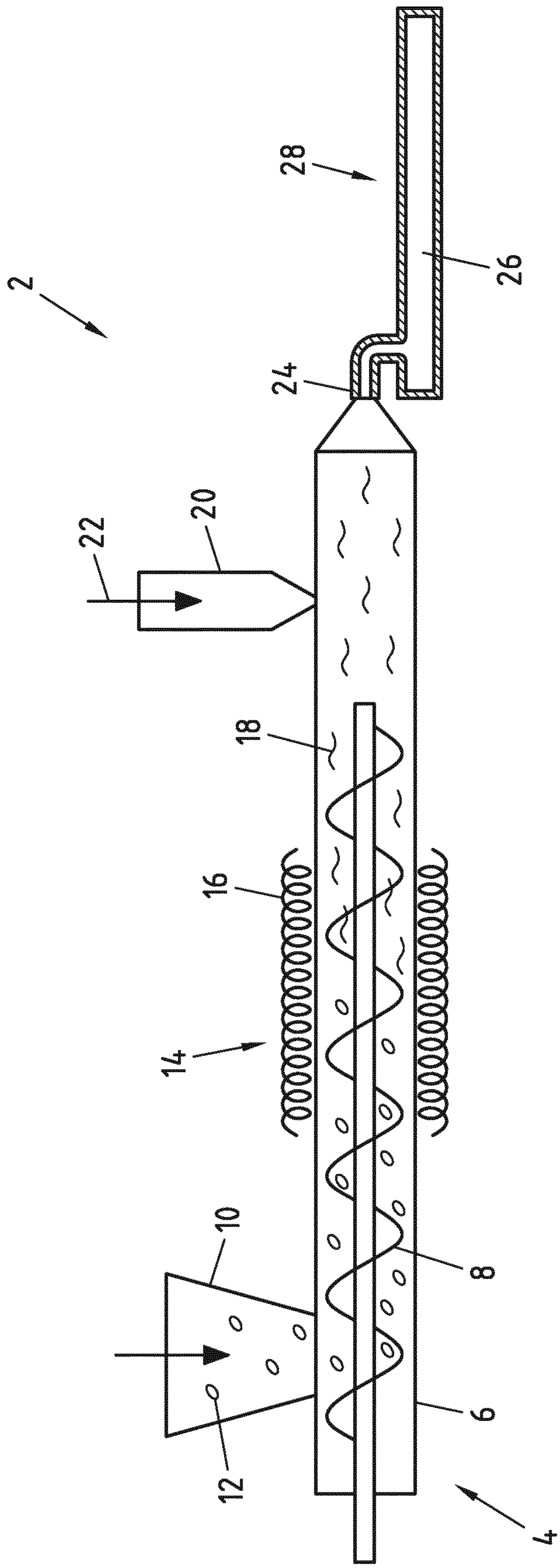


Fig.1

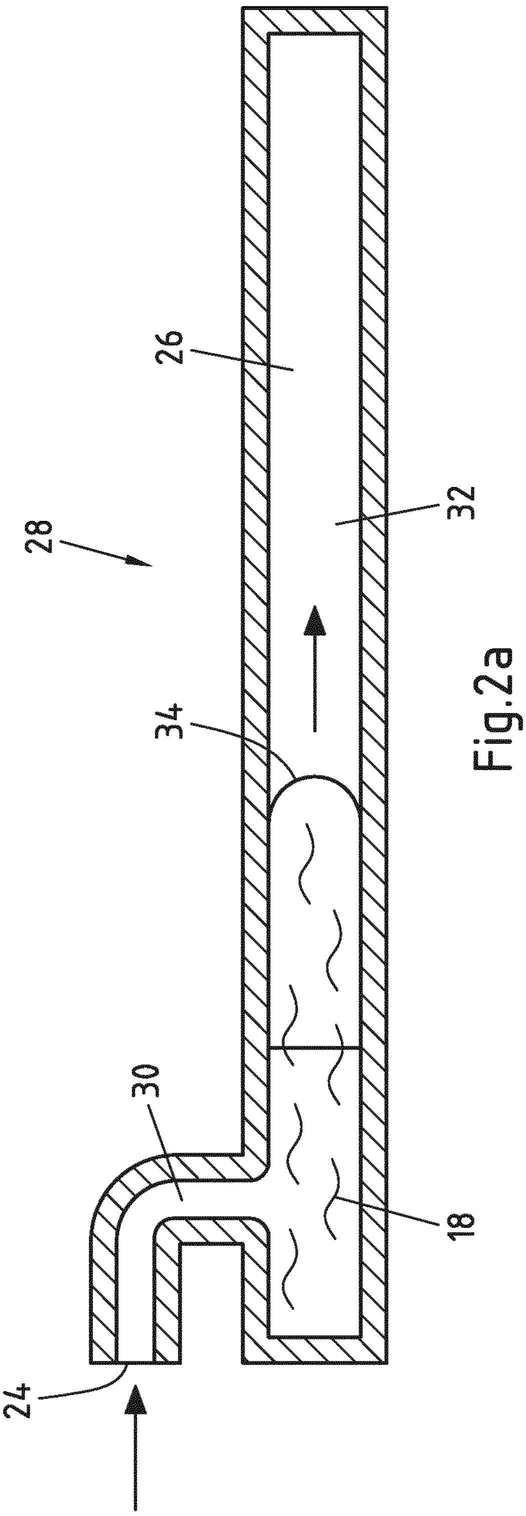

Fig.2a

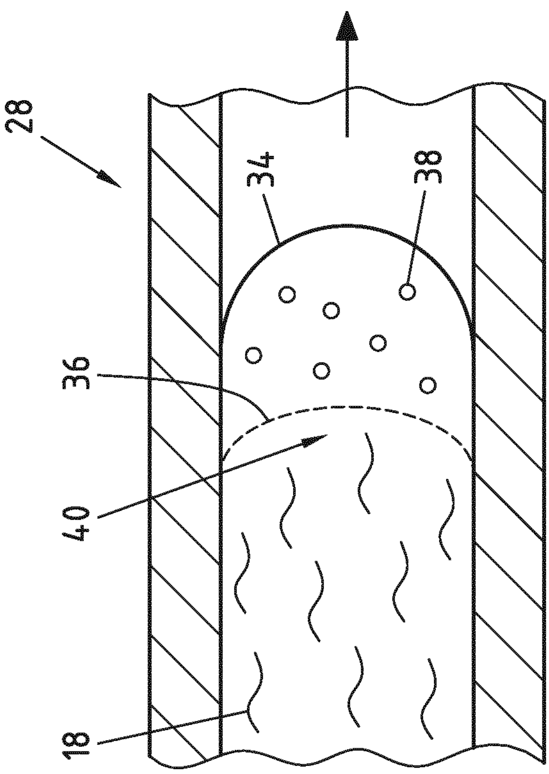

Fig.2b

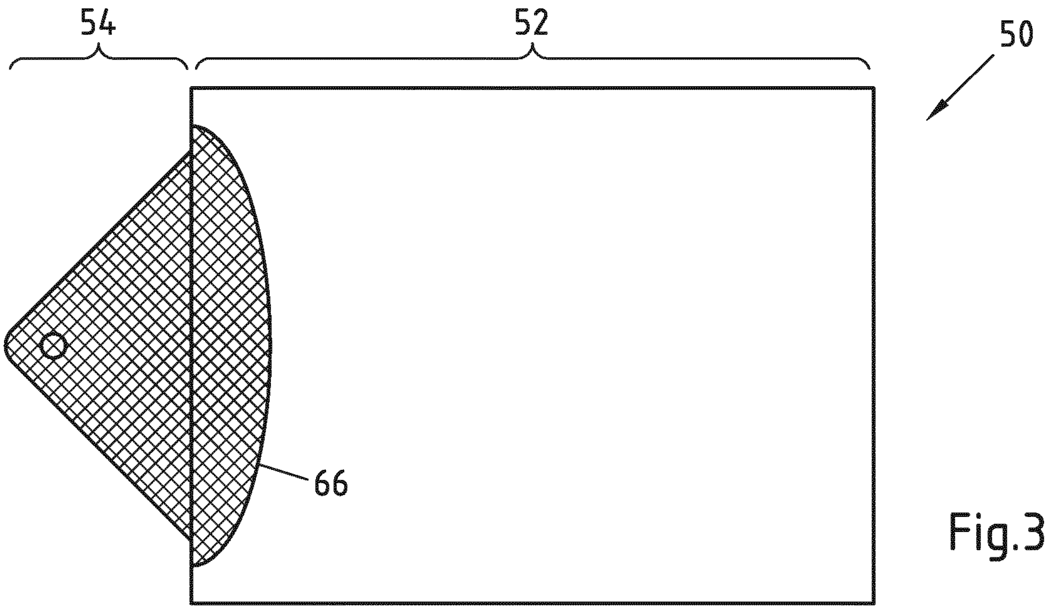


Fig.3a

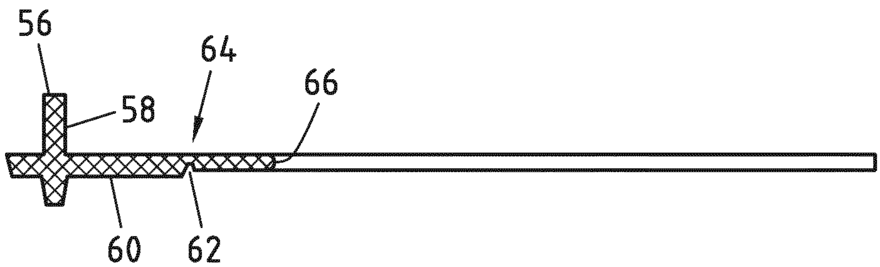


Fig.3b

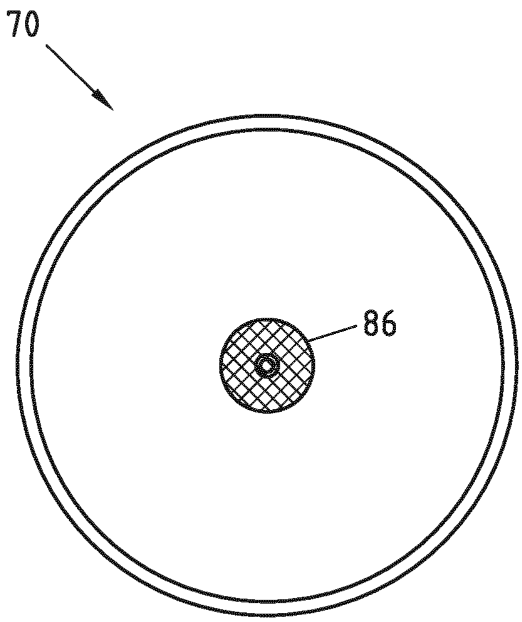


Fig.4a

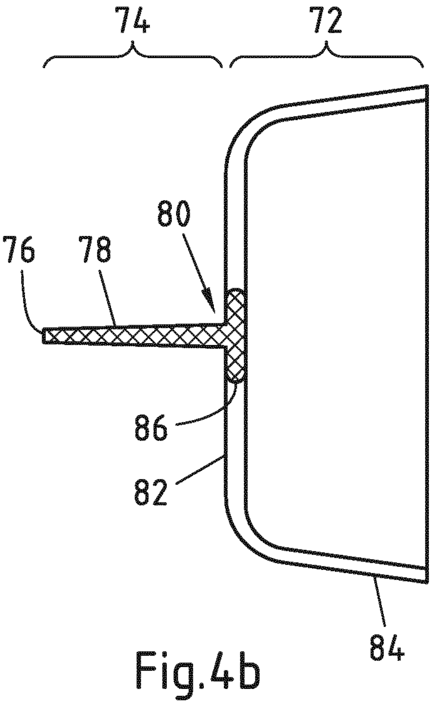


Fig.4b

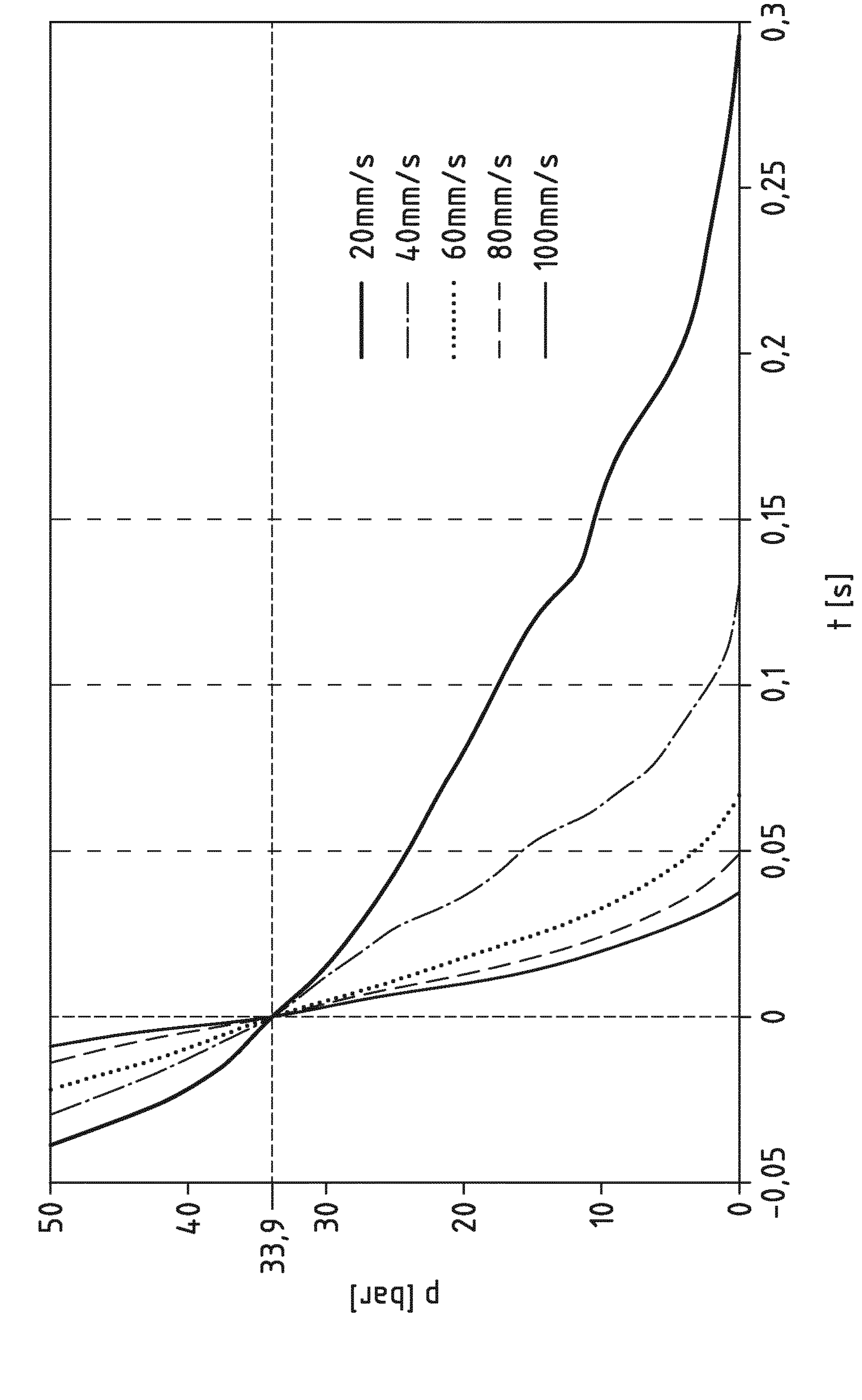

p [bar]
50
4.0
33,9
30
20
10
0
-0,05
0
0,05
0,1
0,15
0,2
0,25
0,3
t [s]
20mm/s
40mm/s
60mm/s
80mm/s
100mm/s


Fig.5

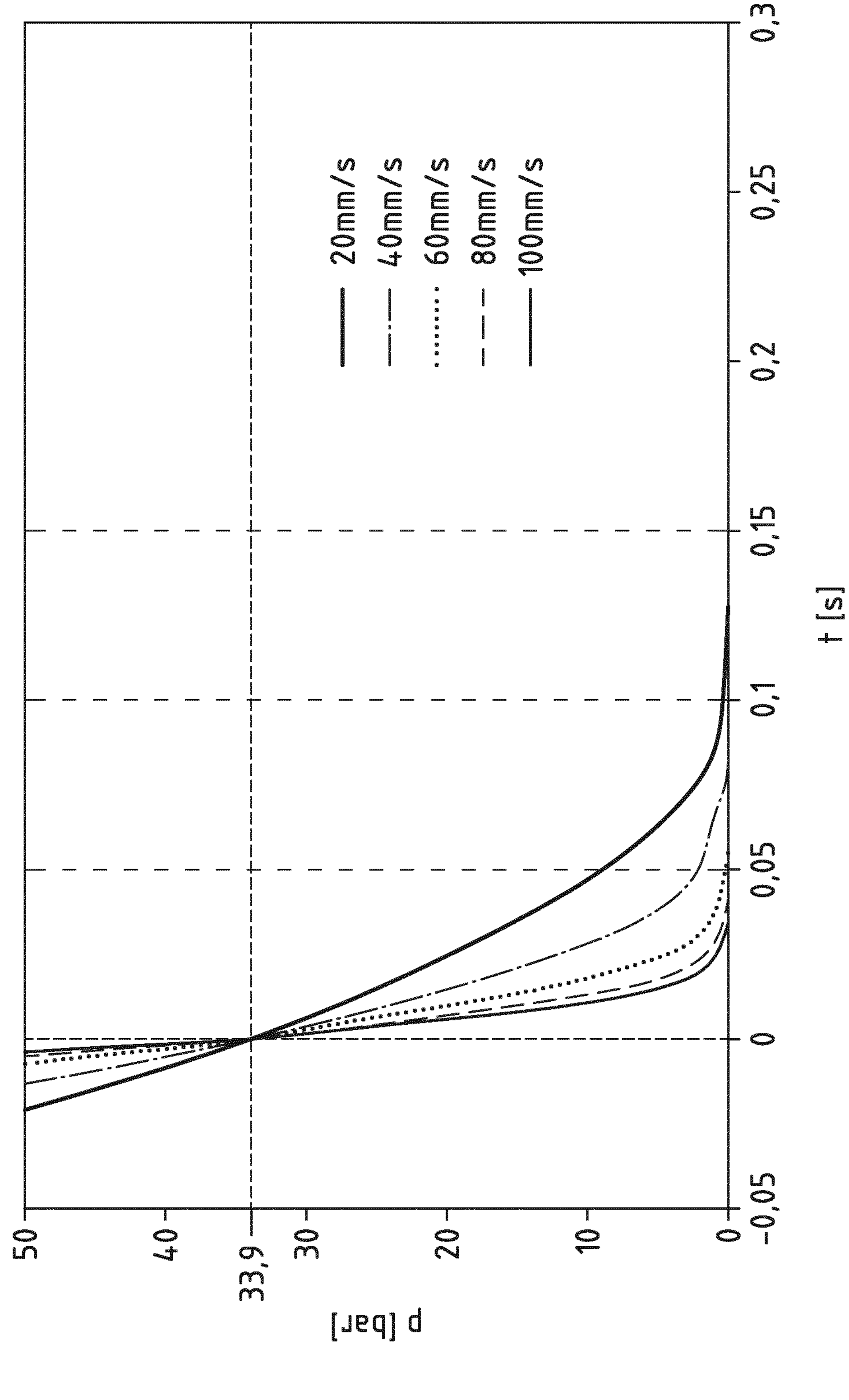
50
4.0
33,9
30
20
10
0
p [bar]
-0,05
0
0,05
0,1
0,15
0,2
0,25
0,3
t [s]
20mm/s
40mm/s
60mm/s
80mm/s
100mm/s

Fig.6

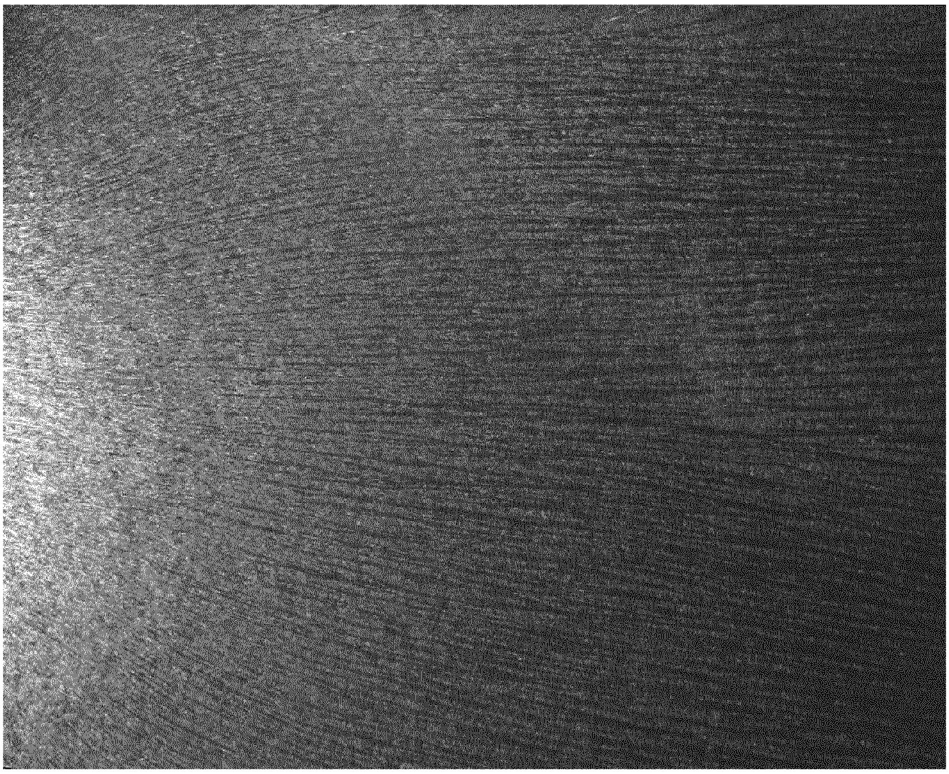

Fig.7b

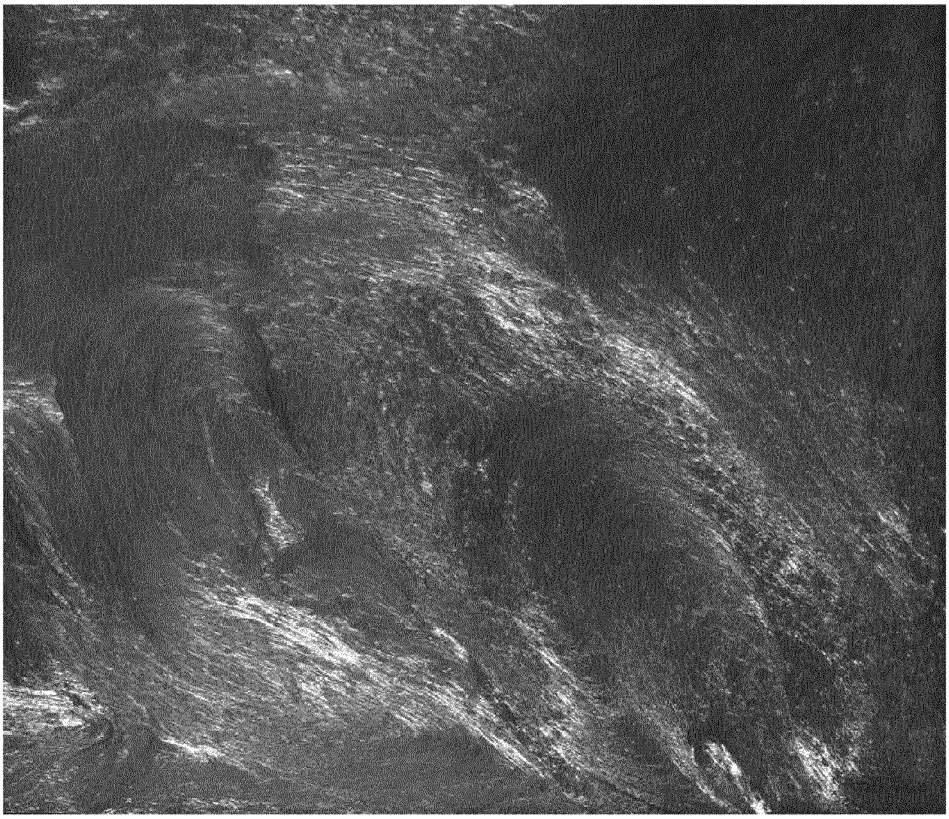

Fig.7a

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- JP 2001198943 A
- EP 1657281 A
- EP 0517044 A
- WO 2006072344 A
- EP 1609818 A
- DE 2842005 A
- US 3419634 A
- DE 3334782 A
- DE 2940024 A
- DE 3007934 A